# EUROPEAN PATENT APPLICATION

(11) **EP 4 425 337 A1**
(43) Date of publication of application: **04.09.2024**
(21) Application number: 22966012.1
(22) Date of filing: 24.11.2022
(51) Int. Cl.: G06F 11/22

(54) **CHIP VERIFICATION SYSTEM, METHOD AND APPARATUS, DEVICE, AND STORAGE MEDIUM**

(71) Applicant: New H3C Semiconductor Technologies Co., Ltd., Chengdu, Sichuan 610213 (CN)
(72) Inventor: ZHANG, Lirong, Beijing 100102 (CN); WANG, Feng, Beijing 100102 (CN); WANG, Lei, Beijing 100102 (CN)
(74) Representative: Zimmermann & Partner Patentanwälte mbB
(86) International application number: PCT/CN2022/134106
(87) International publication number: WO 2024/108496

(57) **Abstract**

An example of the disclosure provides a chip verification system, a method, a device, apparatus and a storage medium, and relates to the technical field of chip verification. The system including a management TB and a simulation TB; the management TB is to control a head TB to start verification through a control channel; the head TB is to generate a simulation input signal and send the simulation input signal to the management TB through a service channel; each of the sub-TBs is to run a locally deployed sub-DUT file to obtain an intermediate result, and send the obtained intermediate result to other sub-TBs through a data channel; a tail TB is to obtain a simulation result for the service simulation task and send the simulation result to the management TB through a service channel; the management TB is further to obtain a benchmark result of the service simulation task based on the simulation input signal, and verify the chip according to the benchmark result and the simulation result. The scheme provided by the example of the disclosure can improve an efficiency of chip verification.

## Description

### TECHNICAL FIELD

The disclosure relates to the technical field of chip verification, in particular to a chip verification system, method, device, apparatus and a storage medium.

### BACKGROUND

It is necessary to verify a chip before it is produced, in order to ensure that functions of the chip meets design requirements.

In a simulation and verification stage of the chip, a conventional idea is to verify the chip through simulation based on a DUT (Design Under Test) file of the chip by using a single TB (TestBench). When a logic scale of the DUT is large, a simulation efficiency of a single TB is low, leading to a low efficiency of the chip verification.

### SUMMARY

An example of the disclosure aims to provide a chip verification system, method, device, apparatus and storage medium, so as to improve an efficiency of chip verification. A specific technical solution is as follows.

In a first aspect, an example of the disclosure provides a chip verification system, including a management TestBench TB and a simulation TB, wherein the simulation TB includes a plurality of sub-TBs, and each of the sub-TBs is deployed with a different sub-DUT file of sub-DUT files of a Design Under Test DUT file of a chip, wherein,
the management TB is to control a head TB to start verification through a control channel, wherein the head TB is a sub-TB deployed with a first sub-DUT file for a service simulation task;
the head TB is to generate a simulation input signal and send the simulation input signal to the management TB through a service channel;
each of the sub-TBs is to run a locally deployed sub-DUT file to obtain an intermediate result, and send the obtained intermediate result to other sub-TBs through a data channel;
a tail TB is to obtain a simulation result for the service simulation task and send the simulation result to the management TB through a service channel, wherein the tail TB is a sub-TB deployed with a last sub-DUT file for the service simulation task;
the management TB is further to obtain a benchmark result of the service simulation task based on the simulation input signal, and verify the chip according to the benchmark result and the simulation result.

In a second aspect, an example of the disclosure provides a chip verification method, which is applied to a management TB in a chip verification system, wherein the chip verification system further includes a simulation TB, the simulation TB includes a plurality of sub-TBs, and each of the sub-TBs is deployed with a different sub-DUT file of sub-DUT files of a Design Under Test DUT file of a chip;
the method includes:
controlling a head TB to start verification through a control channel, so that the head TB generates a simulation input signal, wherein the head TB is a sub-TB deployed with a first sub-DUT file for a service simulation task;
receiving the simulation input signal sent by the head TB through a service channel;
receiving a simulation result for the service simulation task fed back by a tail TB through a service channel, wherein the tail TB is a sub-TB deployed with a last sub-DUT file for the service simulation task;
obtaining a benchmark result of the service simulation task based on the simulation input signal, and verifying the chip according to the benchmark result and the simulation result.

In a third aspect, an example of the disclosure provides a chip verification method, which is applied to a sub-TB of sub-TBs included in a simulation TestBench TB in a chip verification system, wherein the chip verification system further includes a management TB, and each of the sub-TBs is deployed with a different sub-DUT file of sub-DUT files of a Design Under Test DUT file of a chip;
the method includes:
if the sub-TB is a head TB, in response to a startup verification control of the management TB, generating a simulation input signal, and running a locally deployed local sub-DUT file based on the simulation input signal to obtain an intermediate result; sending the simulation input signal to the management TB through a service channel, and sending the obtained intermediate result to a downstream TB through a data channel, wherein a sub-DUT file deployed for the downstream TB is a downstream sub-DUT file of the local sub-DUT file, and the head TB is a sub-TB deployed with a first sub-DUT file for a service simulation task;
if the sub-TB is an intermediate TB, receiving an intermediate result sent by an upstream TB, running a locally deployed local sub-DUT file with the received intermediate result as an input to obtain an intermediate result, and sending the obtained intermediate result to a downstream TB through a data channel between the intermediate TB and the downstream TB, wherein a sub-DUT file deployed for the upstream TB is an upstream sub-DUT file of the local sub-DUT file, and the intermediate TB is a sub-TB other than the head TB and the tail TB;
if the sub-TB is a tail TB, receiving an intermediate result sent by an upstream TB, running a locally deployed local sub-DUT file with the received intermediate result as an input to obtain a simulation result, and sending the simulation result to the management TB through a service channel, so that the management TB verifies the chip based on the simulation input signal and the simulation result, wherein the tail TB is a sub-TB deployed with a last sub-DUT file for the service simulation task.

In a fourth aspect, an example of the disclosure provides a chip verification device, which is applied to a management TB in a chip verification system, wherein the chip verification system further includes a simulation TB, the simulation TB includes a plurality of sub-TBs, and each of the sub-TBs is deployed with a different sub-DUT file of sub-DUT files of a Design Under Test DUT file of a chip;
the device includes:
a control module to control a head TB to start verification through a control channel, so that the head TB generates a simulation input signal, wherein the head TB is a sub-TB deployed with a first sub-DUT file for a service simulation task;
a service information receiving module to receive the simulation input signal sent by the head TB through a service channel; receive a simulation result for the service simulation task fed back by a tail TB through a service channel, wherein the tail TB is a sub-TB deployed with a last sub-DUT file for the service simulation task;
a chip verification module to obtain a benchmark result of the service simulation task based on the simulation input signal, and verify the chip according to the benchmark result and the simulation result.

In a fifth aspect, an example of the disclosure provides a chip verification device, which is applied to a sub-TB of sub-TBs included in a simulation TB in a chip verification system, wherein the chip verification system further includes a management TB, and each of the sub-TBs is deployed with a different sub-DUT file of sub-DUT files of a Design Under Test DUT file of a chip;
the device includes:
a control response module to generate, if the simulation TB is a head TB, a simulation input signal in response to a startup verification control of the management TB, and run a locally deployed local sub-DUT file based on the simulation input signal to obtain an intermediate result, wherein the head TB is a sub-TB deployed with a first sub-DUT file for a service simulation task;
a data transceiver module to send, if the simulation TB is the head TB, the obtained intermediate result to a downstream TB through a data channel; if the sub-TB is an intermediate TB, receive an intermediate result sent by an upstream TB, run a locally deployed local sub-DUT file with a received intermediate result as an input to obtain an intermediate result, and send an obtained intermediate result to a downstream TB through a data channel between the intermediate TB and the downstream TB; if the sub-TB is a tail TB, receive an intermediate result sent by an upstream TB, run a locally deployed local sub-DUT file with a received intermediate result as an input to obtain a simulation result, wherein the tail TB is a sub-TB deployed with a last sub-DUT file for the service simulation task, the intermediate TB is a sub-TB other than the head TB and the tail TB, a sub-DUT file deployed for the downstream TB is a downstream sub-DUT file of the local sub-DUT file, and a sub-DUT file deployed for the upstream TB is an upstream sub-DUT file of the local sub-DUT file;
a service information sending module to send, if the simulation TB is the head TB, the simulation input signal to the management TB through a service channel; if the sub-TB is the tail TB, send the simulation result to the management TB through a service channel, so that the management TB verifies the chip based on the simulation input signal and the simulation result.

In a sixth aspect, an example of the disclosure provides a verification platform, including a processor and a machine-readable storage medium, wherein the machine-readable storage medium stores machine-executable instructions which when executed by the processor, cause the processor to implement the chip verification method in the second aspect or the third aspect.

In a seventh aspect, an example of the disclosure provides a computer readable storage medium, storing machine executable instructions which, when called and executed by a processor, cause the processor to implement the chip verification method in the second aspect or the third aspect.

In an eighth aspect, an example of the disclosure further provides a computer program product containing instructions, which, when run on a computer, causes the computer to implement the chip verification method in the second aspect or the third aspect.

It can be seen from the above that, when the scheme provided by an example of the disclosure is used for chip verification, the head TB can generate the simulation input signal in response to the control of the management TB, and send the simulation input signal to the management TB through the service channel; the tail TB can obtain the simulation result for the service simulation task, and feed back the obtained simulation result to the management TB through the service channel, so that the management TB can receive the simulation input signal and the simulation result, and then successfully verify the chip based on the simulation input signal and the simulation result.

In addition, during obtaining of the simulation result, each sub-TB is to run a locally deployed sub-DUT file to obtain an intermediate result, and send the obtained intermediate result to other sub-TBs through a data channel. It can be seen that, on the one hand, each sub-TB can send the obtained intermediate result to other sub-TBs so that other sub-TBs can obtain new intermediate results based on the received intermediate result; on the other hand, each sub-TB can continue to run a locally deployed sub-DUT file to obtain an intermediate result. That is, in the above process, the respective sub-TBs are executed in parallel. A process of running the DUT file to obtain the simulation result often takes a lot of computing resources and a long time. However, in the above scheme, the respective sub-TBs are executed in parallel and use its own computing resources to run the locally deployed sub-DUT file to obtain the simulation result together, which reduces the time-consuming of obtaining the simulation result and improves the efficiency of obtaining the simulation result, thus improving the efficiency of verifying the chip based on the simulation result.

Furthermore, the management TB controls the head TB to start verification through the control channel, the head TB and the tail TB respectively feedback the simulation input signal and simulation result to the management TB through the service channel, and each sub-TB sends the obtained intermediate result to other sub-TBs through the data channel. It can be seen from the above that different types of information or data are transmitted through the different types of transmission channels, so that transmission services of different dimensions can be separated from each other, which is conducive to avoiding confusion among different transmission services and improving the transmission efficiency of information and data.

Of course, it is not necessary for any product or method of the disclosure to achieve all the advantages described above at the same time.

### BRIEF DESCRIPTION OF THE DRAWINGS

In order to more clearly describe the technical solutions of the examples of the disclosure and the prior art, accompanying drawings that need to be used in the examples and the prior art will be briefly described below. Obviously, accompanying drawings described below are for only some of examples of the disclosure. Those skilled in the art may also obtain other accompanying drawings based on these accompanying drawings without any creative efforts.
Fig. 1 is a schematic structure diagram of a first chip verification system provided by an example of the present disclosure;
Fig. 2 is a signaling interaction diagram of a first chip verification method provided by an example of the present disclosure;
Fig. 3 is a signaling interaction diagram of a second chip verification method provided by an example of the present disclosure;
Fig. 4 is a signaling interaction diagram of a third chip verification method provided by an example of the present disclosure;
Fig. 5 is a schematic diagram of contents of a topology file provided by an example of the present disclosure;
Fig. 6 is a schematic diagram of a topology file generation interface provided by an example of the present disclosure;
Fig. 7 is a schematic structure diagram of a second chip verification system provided by an example of the present disclosure;
Figs. 8a and 8b are signaling interaction diagrams of a fourth chip verification method provided by an example of the present disclosure;
Fig. 9 is a schematic flowchart of a fifth chip verification method provided by an example of the present disclosure;
Fig. 10 is a schematic flowchart of a sixth chip verification method provided by an example of the present disclosure;
Fig. 11 is a schematic flowchart of a seventh chip verification method provided by an example of the present disclosure;
Fig. 12 is a schematic flowchart of an eighth chip verification method provided by an example of the present disclosure;
Fig. 13 is a schematic flowchart of a ninth chip verification method provided by an example of the present disclosure;
Fig. 14 is a schematic structure diagram of a first chip verification device provided by an example of the present disclosure;
Fig. 15 is a schematic structure diagram of a second chip verification device provided by an example of the present disclosure;
Fig. 16 is a schematic structure diagram of a verification platform provided by an example of the present disclosure.

### DETAILED DESCRIPTION

In order to make the objective, technical solutions and advantages of the disclosure clearer and more understandable, the disclosure will be described in more detail below with reference to the accompanying drawings and examples. Obviously, the described examples are only some, and not all, of the examples of the disclosure. All other examples obtained based on the examples of the disclosure by those skilled in the art without any creative efforts fall into the scope of protection of the disclosure.

Firstly, related concepts involved in technical solutions provided in the disclosure are explained.

### 1. DUT file

A design file to be verified, i.e., a chip design file to be verified, which can be written by HDL (Hardware Description Language).

### 2. Sub-DUT file

A part of the DUT file obtained by dividing the DUT file.

Examples of the disclosure do not limit a specific way of obtaining the sub-DUT file by dividing the DUT file. For example, a staff can divide the DUT file according to sub-functions of a chip to be verified depending on actual situations. In this case, each sub-DUT file obtained by dividing corresponds to each sub-function of a chip to be verified.

### 3. Service simulation task

A task of verifying functions of a chip by TB simulation, which can also be called one verification case, corresponding to one verification process. Information of each sub-DUT file that needs to be executed in this verification process can be recorded in the service simulation task.

For example, the service simulation task T1 is the verification for a sub-function 1 of a chip, information of sub-DUT files 1 to 3 related to the sub-function 1 is recorded in the T1. The service simulation task T2 is the verification for sub-function 2 and sub-function 3 of the chip, information of sub-DUT files 5 to 9 related to the sub-function 2 and the sub-function 3 is recorded in the T2.

### 4. A downstream sub-DUT file and an upstream sub-DUT file of the sub-DUT file

As can be seen from the above description for the service simulation task, the service simulation task will involve a plurality of sub-DUT files that need to be executed in this verification process. These sub-DUT files have a certain execution order in the verification process.

Based on the above understanding, a sub-DUT file whose execution order follows one sub-DUT file in the verification process can be called a downstream sub-DUT file of this sub-DUT file.

Similarly, a sub-DUT file whose execution order precedes one sub-DUT file in the verification process can be called an upstream sub-DUT file of this sub-DUT file.

### 5. A downstream TB and an upstream TB of a sub-TB

For one sub-TB, a sub-DUT file deployed for a downstream TB of the sub-TB is a downstream sub-DUT file of a local sub-DUT file deployed for the sub-TB, and similarly, a sub-DUT file deployed for an upstream TB of the sub-TB is an upstream sub-DUT file of the local sub-DUT file deployed for the sub-TB.

### 6. A head TB, tail TB and intermediate TB

The head TB is a sub-TB deployed with a first sub-DUT file for the service simulation task, and similarly, the tail TB is a sub-TB deployed with a last sub-DUT file for the service simulation task. The intermediate TB is a sub-TB other than the head TB and the tail TB.

The chip verification scheme provided by an example of the disclosure is described below.

In order to improve an efficiency of chip verification, an example of the disclosure provides a chip verification system, method, device, apparatus and storage medium, which are described in detail below.

Firstly, an example of the disclosure provides a chip verification system, including a management TB and a simulation TB, wherein the simulation TB includes a plurality of sub-TBs, and each of the plurality of sub-TBs is deployed with a different sub-DUT file of sub-DUT files of a DUT file of a chip, wherein
the management TB is to control a head TB to start verification through a control channel, wherein the head TB is a sub-TB deployed with a first sub-DUT file for a service simulation task;
the head TB is to generate a simulation input signal and send the simulation input signal to the management TB through a service channel;
each of the sub-TBs is to run a locally deployed sub-DUT file to obtain an intermediate result, and send the obtained intermediate result to other sub-TBs through a data channel;
a tail TB is to obtain a simulation result for the service simulation task, and feed back the simulation result to the management TB through the service channel, wherein the tail TB is a sub-TB deployed with a last sub-DUT file of the service simulation task;
the management TB is further to obtain a benchmark result of the service simulation task based on the simulation input signal, and verify the chip according to the benchmark result and the simulation result.

It can be seen from the above that, when the scheme provided by an example of the disclosure is used for chip verification, the head TB can generate the simulation input signal in response to the control of the management TB and send the simulation input signal to the management TB through the service channel, and the tail TB can get the simulation result for the service simulation task and feed back the obtained simulation result to the management TB through the service channel, so that the management TB can receive the above simulation input signal and simulation result, and then successfully verify the chip based on the above simulation input signal and simulation result.

In addition, when the above simulation result is obtained, each sub-TB is to run the locally deployed sub-DUT files to obtain the intermediate result and send the obtained intermediate result to other sub-TBs through the data channel. It can be seen that, on the one hand, each sub-TB can send the obtained intermediate result to other sub-TBs so that other sub-TBs can obtain new intermediate results based on the received intermediate result; on the other hand, each sub-TB can simultaneously continue to run the locally deployed sub-DUT file to obtain an intermediate result. That is, in the above process, the respective sub-TBs are executed in parallel. A process of running the DUT file to obtain the simulation result often takes a lot of computing resources and a long time. However, in the above scheme, the respective sub-TBs are executed in parallel and use its own computing resources to run the locally deployed sub-DUT file to obtain the simulation result together, which reduces the time-consuming of obtaining the simulation result and improves the efficiency of obtaining the simulation result, thus improving the efficiency of verifying the chip based on the simulation result.

Furthermore, the management TB controls the head TB to start verification through the control channel, the head TB and the tail TB respectively feed back the simulation input signal and simulation result to the management TB through the service channel, and each sub-TB sends the obtained intermediate result to other sub-TBs through the data channel. It can be seen from the above that different types of information or data are transmitted through the different types of transmission channels, so that transmission services of different dimensions can be separated from each other, which is conducive to avoiding confusion among different transmission services and improving the transmission efficiency of information and data.

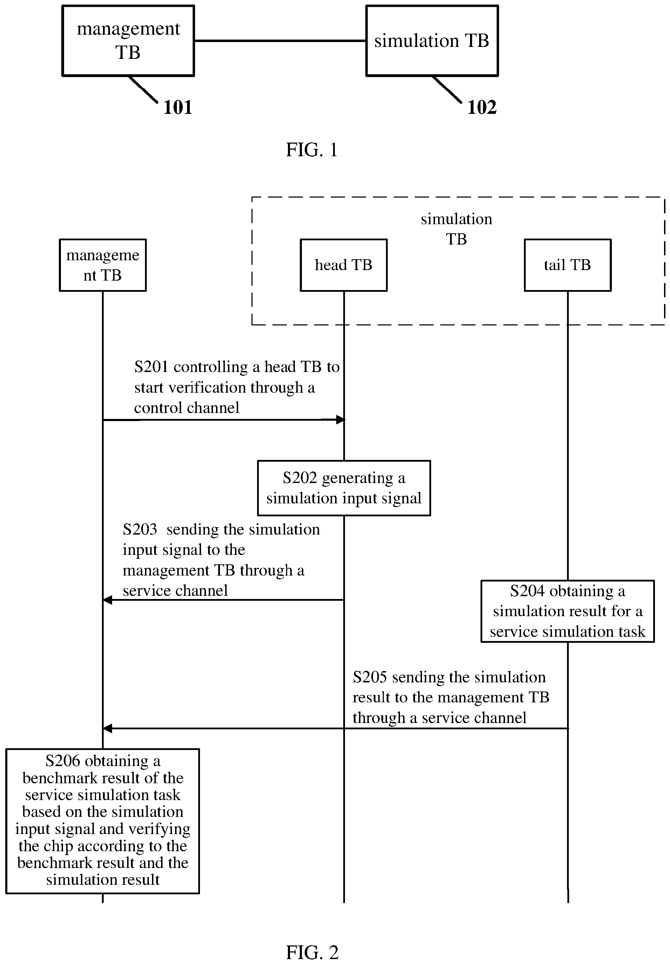

Referring to Fig. 1, a schematic structure diagram of a first chip verification system provided by an example of the disclosure is shown. The first chip verification system includes a management TB 101 and an simulation TB 102, wherein the simulation TB 102 includes a plurality of sub-TBs, and each of the plurality of sub-TBs is deployed with a different sub-DUT file of sub-DUT files of a DUT file of a chip.

It should be noted that in Fig. 1, the simulation TB 102 includes respective sub-TBs including a head TB and a tail TB, and the connection between the management TB 101 and the simulation TB 102 indicates a communication link established between the management TB 101 and the above sub-TBs.

First, a scene in which the chip verification system provided by the example of the disclosure is used for chip verification will be explained.

As can be seen from Fig. 1, the chip verification system provided by the example of the disclosure includes the management TB and the simulation TB, wherein the simulation TB includes a plurality of sub-TBs, and each of the plurality of sub-TBs is deployed with a different sub-DUT file of sub-DUT files of a DUT file of the chip.

Before chip verification, the management TB and each of the above sub-TBs can start working, and then each sub-TB can run its own locally deployed sub-DUT file in parallel. At this time, each sub-TB will not generate an operation result for the simulation input signal as no simulation input signal is generated, until the management TB controls the head TB to start the verification. The head TB starts the verification after receiving a control message for starting the verification sent by the management TB and generates the simulation input signal. Then, the chip verification scheme provided by the example of the disclosure will be carried out.

In order to more intuitively explain a mode of chip verification by the above chip verification system, the chip verification scheme provided by an example of the disclosure is explained in detail in a form of signaling diagram below.

Referring to Fig. 2, a signaling interaction diagram of a first chip verification method provided by an example of the disclosure is shown. The first chip verification method includes following blocks S201-S206.

S201: the management TB controls the head TB to start verification through a control channel.

The head TB is a sub-TB deployed with a first sub-DUT file for a service simulation task.

The first sub-DUT file for the service simulation task is a sub-DUT file to be executed firstly during the execution of the service simulation task.

The control channel, as well as a service channel and data channel mentioned later, are all transmission channels for transmitting data or messages.

In this block, the management TB controls the head TB to start verification can be understood as that the management TB controls the head TB to generate a simulation input signal, so as to start verification for the service simulation task, that is, to start verification of some or all of functions of the chip targeted by the service simulation task.

Specifically, the management TB can send a control message to the head TB through the control channel, so as to control the head TB to start verification.

S202: the head TB generates a simulation input signal.

Specifically, the head TB can generate the simulation input signal according to following two situations.

In one situation, the head TB stores information for generating the simulation input signal in advance, so that the head TB can generate the simulation input signal according to the above information after receiving the control message sent by the management TB.

In another situation, when the management TB controls the head TB to generate the simulation input signal, a message for generating the simulation input signal can be sent to the head TB, so that the head TB can generate the simulation input signal according to the received message.

It should be noted that, after the simulation input signal is generated by the head TB in this block, each sub-TB is to run the locally deployed sub-DUT file to obtain an intermediate result, and the obtained intermediate result is sent to other sub-TBs through the data channel.

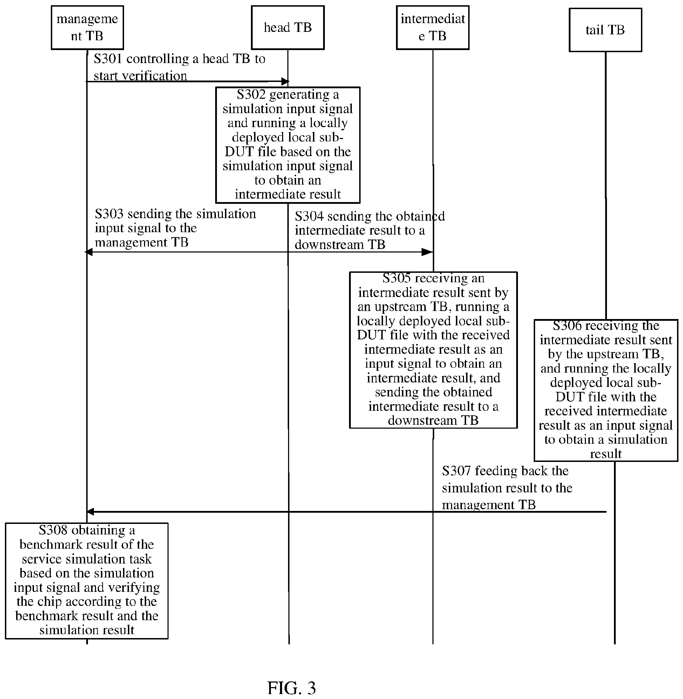

The concept of the intermediate results is detailed in an example shown in Fig. 3, and will not be described in detail here.

S203: the head TB sends the simulation input signal to the management TB through a service channel.

S204: a tail TB obtains a simulation result for a service simulation task.

The tail TB is a sub-TB deployed with a last sub-DUT file for the service simulation task.

The last sub-DUT file for the service simulation task can be understood as a sub-DUT file to be executed lastly during the execution of the service simulation task.

It can be seen that a locally deployed sub-DUT file in the tail TB has no downstream sub-DUT file, which indicates that the deployed sub-DUT file is a last sub-DUT file that needs to be executed in this service simulation task. Therefore, a result obtained by running the locally deployed sub-DUT file by the tail TB is the simulation result for this service simulation task.

S205: the tail TB feeds back the simulation result to the management TB through a service channel.

S206: the management TB obtains a benchmark result of the service simulation task based on the simulation input signal and verifies the chip according to the benchmark result and the simulation result.

Specifically, after the management TB receives the simulation input signal, the simulation input signal can be input into a locally deployed reference model to obtain the benchmark result of a model output. The reference model is written in a high-level language and describes a functional logic of the chip.

After obtaining the benchmark result, the management TB can compare whether the simulation result is consistent with the benchmark result. If the simulation result is consistent with the benchmark result, it is determined that the verification of the chip for the service simulation task passes. If the simulation result is not consistent with the benchmark result, it is determined that the verification of the chip for the service simulation task fails.

It can be seen from the above that, when the scheme provided by the example of the disclosure is used for chip verification, the head TB can generate the simulation input signal in response to the control of the management TB and send the simulation input signal to the management TB through the service channel, and the tail TB can obtain the simulation result for the service simulation task and feed back the obtained simulation result to the management TB through the service channel, so that the management TB can receive the simulation input signal and the simulation result, and then successfully verify the chip based on the simulation input signal and the simulation result.

In addition, when the above simulation result is obtained, each sub-TB is to run the locally deployed sub-DUT files to obtain the intermediate result and send the obtained intermediate result to other sub-TBs through the data channel. It can be seen that, on the one hand, each sub-TB can send the obtained intermediate result to other sub-TBs so that other sub-TBs can obtain new intermediate results based on the received intermediate result; on the other hand, each sub-TB can simultaneously continue to run the locally deployed sub-DUT file to obtain an intermediate result. That is, in the above process, the respective sub-TBs are executed in parallel. A process of running the DUT file to obtain the simulation result often takes a lot of computing resources and a long time. However, in the above scheme, the respective sub-TBs are executed and use its own computing resources to run the locally deployed sub-DUT file to obtain the simulation result together, which reduces the time-consuming of obtaining the simulation result and improves an efficiency of obtaining the simulation result, thus improving the efficiency of verifying the chip based on the simulation result.

Furthermore, the management TB controls the head TB to start verification through the control channel, the head TB and the tail TB respectively feed back the simulation input signal and simulation result to the management TB through the service channel, and each sub-TB sends the obtained intermediate result to other sub-TBs through the data channel. It can be seen from the above that different types of information or data are transmitted through the different types of transmission channels, so that transmission services of different dimensions can be separated from each other, which is conducive to avoiding confusion among different transmission services and improving the transmission efficiency of information and data.

In addition, the above scheme is also suitable for verification scenarios with large DUT logic scale of various chips to be verified, such as networking verification of multiple chip sets, verification of Chiplet system with multiple die-to-die interconnection, distributed joint simulation of EMU (Emulator) and EDA (electronic design assistance).

In an example of the disclosure, the management TB may also send a verification end message to each sub-TB through the control channel between the management TB and each sub-TB after determining that the verification for chip is ended. In response to the verification end message, each sub-TB can close the service channel with the management TB, the data channel with an adjacent sub-TB and the control channel with the management TB.

The end condition of the chip verification can be that each service simulation task has traversed all sub-DUT files and the verification for each service simulation task has passed.

In this way, the control channel, service channel and data channel established among various types of TBs can be closed in time after determining that the verification for chip is ended, so that memory occupied by the above transmission channels can be released in time.

In an example of the disclosure, each sub-TB can send an intermediate result obtained by itself to other sub-TBs through a data channel according to the upstream and downstream relationship between the sub-TB itself and other sub-TBs. In view of the above situation, an example of the disclosure provides a second chip verification method.

Referring to fig. 3, a signaling interaction diagram of a second chip verification method provided by an example of the disclosure is shown. The second chip verification method includes following blocks S301-S308.

S301: a management TB controls a head simulation TB to start verification.

Specifically, the management TB can control the head simulation TB to start verification in following ways.

In an example, it can be the same as the block S201, which will not be described here.

In another example, an access address of the head TB can be stored in the management TB, so that the management TB can control the head TB to generate an excitation signal based on the access address.

The access address can be an IP address, MAC address and so on of the head TB. A way to control the head TB to generate an excitation signal based on the access address can be to send an instruction message for starting verification to the head TB and so on.

S302: the head TB generates a simulation input signal and runs a locally deployed local sub-DUT file based on the simulation input signal to obtain an intermediate result.

The simulation input signal is an input signal for the head TB running the local sub-DUT file. In this way, when the head TB runs the local sub-DUT file, the local sub-DUT file is input with the simulation input signal to obtain an output result. The output result can be called an intermediate result for the simulation input signal.

In one case, when the head TB runs the local sub-DUT file, it can be considered that a functional module corresponding to the local sub-DUT file in the chip has been simulated. Based on this, the above intermediate result can be understood as an interface timing output by the functional module for the simulation input signal.

S303: the head TB sends the simulation input signal to the management TB.

Specifically, the head TB can send the simulation input signal to the management TB in following ways.

In an example, the head TB can send the simulation input signal to the management TB through the service channel.

In another example, an access address of the management TB can be stored in the head TB in advance, so that after generating the simulation input signal, the head TB can send the generated simulation input signal to the management TB based on the access address.

S304: the head TB sends the obtained intermediate result to a downstream TB.

A sub-DUT file deployed for the downstream TB is a downstream sub-DUT file of the local sub-DUT file.

In this block, after obtaining the intermediate result, the head TB can send the obtained intermediate result to its downstream TB. The downstream TB of the head TB may be one or multiple.

Specifically, the head TB can send the obtained intermediate result to the downstream TB in following ways.

In one example, an access address of the downstream TB may be stored in the head TB in advance, so that after obtaining the intermediate result, the head TB can send the intermediate result to the downstream TB based on the access address.

In another example, the head TB may send the obtained intermediate result to the downstream simulation TB through the data channel between the head TB itself and the downstream simulation TB.

S305: the intermediate TB receives an intermediate result sent by an upstream TB, runs a locally deployed local sub-DUT file with the received intermediate result as an input signal to obtain an intermediate result, and sends the obtained intermediate result to a downstream TB.

The intermediate TB is a sub-TB other than the head TB and the tail TB, and a sub-DUT file deployed for the upstream TB is an upstream sub-DUT file of the local sub-DUT file.

Because the intermediate TB is a sub-TB other than the head TB and the tail TB, a local sub-DUT file deployed locally for the intermediate TB has a downstream sub-DUT file. This indicates that there are subsequent sub-DUT files that need to be executed in this service simulation task, and this service simulation task has not finished yet, that is, the intermediate result obtained by the intermediate TB is not a final simulation result for this service simulation task.

Therefore, the intermediate TB can send the intermediate result obtained by itself to the downstream TB, so that the downstream TB can receive the intermediate result and input the received intermediate result as an input signal into a local sub-DUT file running by the downstream TB.

Similarly, when the intermediate TB runs the local sub-DUT file, it can be considered that a functional module corresponding to the local sub-DUT file in the chip is simulated. Based on this, the above intermediate result can be understood as an interface timing output by the functional module for the simulation input signal.

Specifically, the intermediate TB can send the obtained intermediate result to the downstream TB in following ways.

In one example, an access address of the downstream simulation TB of the intermediate TB can be stored in the intermediate TB in advance, so that after obtaining an intermediate result, the intermediate TB can send the intermediate result to its downstream simulation TB based on the access address.

In another example, the intermediate TB can send the obtained intermediate result to the downstream TB through the data channel between the intermediate TB and the downstream TB.

S306: the tail TB receives the intermediate result sent by the upstream TB, and runs the locally deployed local sub-DUT file with the received intermediate result as an input signal to obtain a simulation result.

In this block, the tail TB is a sub-TB deployed with a last sub-DUT file for the service simulation task, and a local sub-DUT file deployed locally in the tail TB has no downstream sub-DUT file, which indicates that the sub-DUT file deployed for the tail TB is a last sub-DUT file that needs to be executed in this service simulation task. Therefore, a result obtained by running the local sub-DUT file by the tail TB with the intermediate result sent by the upstream TB as the input signal is the simulation result for the service simulation task.

S307: the tail TB feeds back the simulation result to the management TB.

Specifically, the tail TB can feed back the simulation result to the management TB in following ways.

In one example, an access address of the management TB can be stored in the tail TB in advance, so that the tail TB can feed back the obtained intermediate result as the simulation result to the management TB based on the access address.

In another example, the tail TB can send the simulation result to the management TB through the service channel between the tail TB and the management TB.

S308: the management TB obtains a benchmark result of the service simulation task based on the simulation input signal and verifies the chip according to the benchmark result and the simulation result.

This block is the same as block S206 in the example shown in Fig. 2, and will not be repeated here.

It can be seen from the above that, when the scheme provided by an example of the disclosure is used for chip verification, the head TB can run the locally deployed local sub-DUT file based on the simulation input signal generated by itself to obtain the intermediate result, and then send the obtained intermediate result to the downstream TB through the data channel between the head TB and the downstream TB. In this way, the intermediate TB can receive the intermediate result sent by the upstream TB, run the locally deployed local sub-DUT file with the received intermediate result as the input signal to obtain the intermediate result, and send the obtained intermediate result to the downstream TB through the data channel between the intermediate TB and the downstream TB. Then, the tail TB can receive the intermediate result sent by the upstream TB, and run the locally deployed local sub-DUT file with the received intermediate result as the input signal to obtain the simulation result.

In this way, the respective sub-TBs can exchange data in an orderly way according to an upstream and downstream relationship, and finally the tail TB can obtain the simulation result accurately.

On the basis of the examples shown in Fig. 2 and Fig. 3, it can be seen that a data channel needs to be established before data interaction between sub-TBs, and a control channel and a service channel need to be established before information interaction between sub-TBs and the management TB. In view of the above situation, an example of the disclosure provides a third chip verification method.

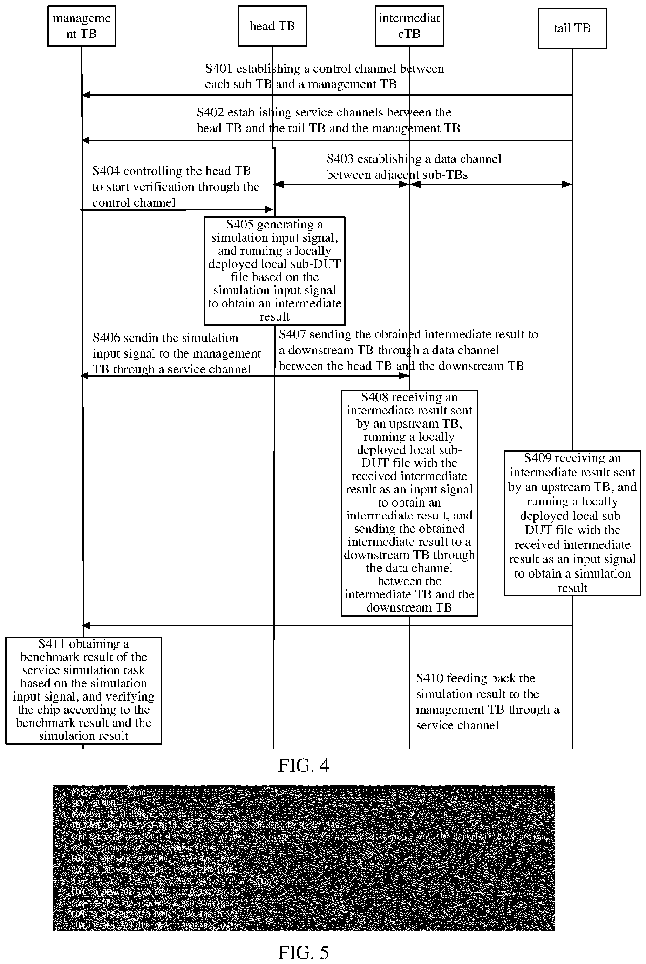

Referring to fig. 4, a signaling interaction diagram of the third chip verification method provided by the example of the disclosure is shown. The third chip verification method includes the following blocks S401-S411.

S401: establishing a control channel between each sub TB and a management TB.

An example of the disclosure does not limit a process of establishing a control channel between each sub-TB and the management TB, which can be that the sub-TB actively establishes a control channel with the management TB, or that the management TB controls the sub-TB to establish a control channel with the management TB.

In one example, the management TB can establish a control server, and each sub-TB establishes a control client. After successfully establishing the control client, each sub-TB establishes a control communication connection with the control server and starts a local control thread based on the control communication connection. The management TB also starts the local control thread based on the control communication connection.

In this way, both the management TB and each sub TB can receive or send a control message based on the local control thread. That is, the control channel between each sub TB and the management TB is established. For example, the control message may be a message indicating start of the verification, TB information and so on.

It can be seen that both the management TB and each sub-TB establish control threads locally based on the control communication connection, so that the control threads can be dedicated to receiving and sending the control message between the management TB and each sub-TB. In this way, the interaction of control messages will not be confused with other types of information, which is conducive to improving the efficiency of control message interaction between the management TB and each sub-TB.

In an example of the disclosure, the data transmitted through the control channel is the data in TLV (Type-Length-Value) format.

Specifically, Type part can use 8 bits to indicate a command type identification; Value part represents Payload, i.e., the actual data content; Length part can use 8 bits to represent the actual byte length of the Value part, and a maximum Value byte length of 256 bytes is supported.

The TLV format is simple and supports the transmission of variable-length data. Therefore, the data control channel can support the transmission of variable-length control messages by adopting the TLV format as the format of data transmitted by the data control channel, thus enriching types of messages that the data control channel can transmit.

S402: establishing a service channel between a head TB and a tail TB and the management TB.

The tail TB is a simulation TB of the last sub-DUT file deployed with the service simulation task.

An example of the disclosure does not limit a process of establishing the service channel between the head TB and the tail TB and the management TB, which can be that the head TB and the tail TB actively establish the service channel with the management TB, or that the management TB controls the head TB and the tail TB to establish the service channel with the management TB itself.

In one example, the management TB can establish a service server. The head TB and the tail TB can establish service communication connections with the service server, and start local service threads based on the service communication connections. The management TB also starts the local service thread based on the service communication connections.

In this way, both the management TB, the head TB and the tail TB can receive or send service information based on the local service thread. That is, the service channel between the head TB, the tail TB and the management TB is established. For example, the service information may be a simulation input signal, a simulation result and so on.

It can be seen that the head TB, the tail TB and the management TB establish service threads locally based on the service communication connections, so that the service threads can be dedicated to receiving and sending service information between the management TB, the head TB and the tail TB. In this way, the service information interaction will not confused with other types of information, which is conducive to improving the efficiency of service information interaction between the management TB and the head TB and the tail TB.

In an example of the disclosure, the data transmitted through the service channel is a variable-length message in a dynamic array format.

Specifically, the size of elements in the dynamic array can be 8 bits. A data sender can request the size of the dynamic array according to the actual data length to be transmitted when sending data, and the data receiver can obtain each variable-length message at a bottom layer of Socket through a de-bonding technology.

It can be seen that the variable-length message supports the transmission of variable-length data. Therefore, the service channel can support the transmission of variable-length information by adopting a variable-length packet format as the format of data transmitted by the service channel, thus enriching the types of information that the service channel can transmit.

S403: establishing a data channel between adjacent sub-TBs.

The sub-DUT files deployed for the adjacent sub-TBs have an upstream-downstream relationship.

An example of the disclosure does not limit a way of establishing a data channel between adjacent sub-TBs. One way of establishing a data channel between adjacent sub-TBs is described below by way of an example described in blocks A-C.

Block A: each sub-TB sends TB information to the management TB through the control channel between each sub-TB and the management TB.

The TB information may include TB identification, access address and other information of the sub-TB.

Block B: the management TB obtains a topology file, updating the topology file according to the received TB information, determines adjacent sub-TBs based on the updated topology file, sends a control message to the determined adjacent sub-TBs through a control channel between the management TB and the determined adjacent sub-TBs, and synchronizes the updated topology file to each sub-TB.

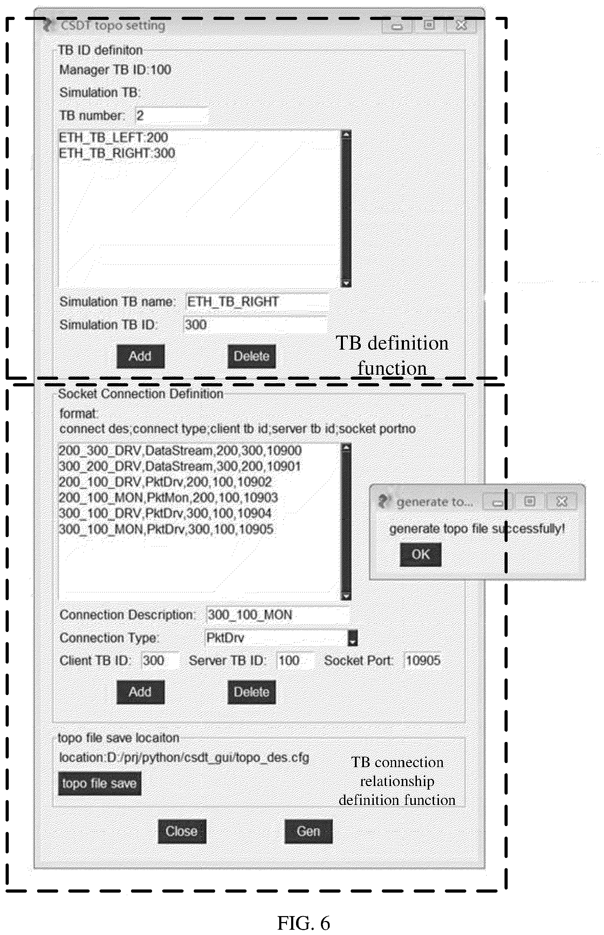

The topology file is to record a topology relationship between the management TB and each sub-TB, TB information of the management TB and TB information of each sub-TB. The detailed description for the topology file can be found in subsequent examples shown in Fig. 5 and Fig. 6, which will not be detailed here.

Specifically, a way of update the topology file according to the received TB information by the management TB can be that the TB information in the topology file is updated to the received TB information, a topology relationship of a sub-TB recorded in the topology file that does not receive TB information is deleted and so on.

After the updated topology file is obtained, the management TB can determine TBs recorded in the topology file that establish the data channel as adjacent sub-TBs, then send a control message to the determined adjacent sub-TBs through the control channel between the management TB and the determined adjacent sub-TBs, and synchronize the updated topology file to each sub-TB. The management TB can send the control message to one of the adjacent sub-TBs, so that the sub-TB receiving the control message can actively initiate a data channel establishment request for another sub-TB. Of course, the management TB can also send the control message to two sub-TBs in the adjacent sub-TBs.

Block C: in response to the control message, an adjacent sub-TB establishes a data communication connection with another adjacent sub-TB based on the received topology file, and start the local data thread according to the data communication connection.

After receiving the control message, the adjacent sub-TB can read a sub-TB adjacent to itself recorded in the topology file, then establish a data communication connection with the sub-TB, and start the local data thread according to the data communication connection.

In this way, the adjacent sub-TB can receive or send data through the data communication connection based on the local data thread. That is, the data channel between the adjacent sub-TBs is established. For example, the data can be the intermediate result and so on.

It can be seen that the management TB can determine the adjacent sub-TBs according to the updated topology file, then synchronize the updated topology file to each sub-TB, and instruct to establish the data channel between the adjacent sub-TBs, so that each sub-TB can accurately determine a sub-TB adjacent to itself based on the updated topology file and establish a data channel with the sub-TB. In addition, the data thread can be dedicated to receiving and sending data between adjacent sub-TBs, so that the data interaction will not be confused with other types of information, which is beneficial to improving an efficiency of data interaction between the adjacent sub-TBs.

In an example of the disclosure, the data transmitted through the data channel is data based on signals in SB (Signal Based) mode or TB (Transaction Based) mode.

When the SB mode is adopted, the data transmitted through the data channel is a port signal value transmitted at a granularity of a clock cycle and generated by running the sub-DUT file. The SB mode requires a Cycle-level data stream synchronization. When the TB mode is adopted, the data transmitted by a data sender is the interface data in the data format of the service channel, and the data receiver can analyze the data to generate the interface timing signal. The TB mode requires the data receiver to analyze the received data, but does not need the Cycle-level data stream synchronization.

In this way, it can choose to transmit the data in the SB mode data or the data in the TB mode in the data channel according to an actual situation, so that the data selected for transmission conforms to characteristics of data that needs to be transmitted through the data channel, thus being beneficial to improving a data transmission efficiency of the data channel.

It should be noted that an example of the disclosure does not limit an execution order between the block S402 and block S403. The block S402 may be executed before or after the block S403, or the two blocks may be executed in parallel.

S404: the management TB controls the head TB to start verification through the control channel.

S405: the head TB generates a simulation input signal, and runs a locally deployed local sub-DUT file based on the simulation input signal to obtain an intermediate result.

S406: the head TB sends the simulation input signal to the management TB through a service channel.

S407: the head TB sends the obtained intermediate result to a downstream TB through a data channel between the head TB and the downstream TB.

S408: the intermediate TB receives an intermediate result sent by an upstream TB, runs a second sub-DUT file with the received intermediate result as an input signal to obtain an intermediate result, and sends the obtained intermediate result to a downstream TB through the data channel between the intermediate TB itself and the downstream TB.

S409: the tail TB receives an intermediate result sent by an upstream TB, and runs a locally deployed local sub-DUT file with the received intermediate result as an input signal to obtain a simulation result.

S410: the tail TB feeds back the simulation result to the management TB through a service channel.

S411: the management TB obtains a benchmark result of the service simulation task based on the simulation input signal, and verifies the chip according to the benchmark result and the simulation result.

The specific implementation of the blocks S404-S411 has been explained in the blocks S301-S308 in the example shown in Fig. 3, which will not be repeated here.

The topology file mentioned above will be explained in detail with reference to Fig. 5.

Referring to Fig. 5, a schematic diagram of contents of a topology file provided by an example of the disclosure is shown.

It can be seen that the contents shown in Fig. 5 are topology description statements recorded in the topology file. Some of the topology description statements in Fig. 5 are introduced below.

### 1. SLV_TB_NUM=2

It indicates that the number of sub-TBs included in the simulation TB is 2.

### 2. TB_NAME_ID_MAP=MASTER_TB: 100

It indicates that the number of management TB is 1, and TB identification of the management TB is 100.

For convenience of expression, TB whose TB identification is *a* can be hereinafter referred to as *TBa* for short.

### 3. ETH_TB_LEFT:200, ETH_TB_RIGHT:300

It indicates that the number of sub-TBs is 2, which are TB200 and TB300 respectively.

### 4. COM_TB_DES=200_300_DRV,1,200,300,10900

It indicates one established transmission channel.

Where "1" indicates that channel type is data channel, "200,300" indicates that TB200 is connected to TB300. For example, the client created by TB200 based on a Socket mode can be connected to the server created by TB300. "10900" indicates a Socket port number used when establishing the connection.

By analogy on the basis of the example "4", it can be seen that the topology description statements shown in Fig. 5 indicates that two data channels (channel type of which is 1) from TB200 to TB300 and TB300 to TB200 are established, two service channels (channel types of which are 2 and 3) from TB200 to TB100 are established, and two service channels (channel types of which are 2 and 3) from TB00 to TB 100 are established.

It should be noted that, as can be seen from the foregoing examples, control channels are established between the management TB and each sub-TB. Therefore, the management TB can establish control channels with each sub-TB by default during the implementation of this scheme. That is, the management TB does not need to parse the topology file when establishing the control channels. Therefore, the topology file does not need to record information used to characterize a control channel establishment relationship between the management TB and the sub-TB.

Next, a generation mode of the topology file is introduced.

Referring to Fig. 6, a schematic diagram of a topology file generation interface provided by an example of the disclosure is shown.

A worker can generate the topology file by using the topology file generation interface shown in Fig. 6.

It can be seen that the topology file generation interface shown in Fig. 6 provides the staff with two functional windows, i.e., TB definition and TB connection relationship definition. The two functions are described respectively below.

### 1. TB definition function

It is information used to determine each sub-TB. Workers can use the function to input TB number, Simulation TB name (sub-TB name) and Simulation TB ID (sub-TB identification) of sub-TBs whose transmission channels is to be established and click an Add button to confirm the input.

### 2. TB connection relationship definition function

It is used to determine a connection relationship among various types of TBs. Workers can use the function to input Connection Description, Client TB ID (identification of TB as a client), Server TB ID (identification of TB as a server) and Socket Port (Socket port number), select Connection Type, and click the Add button to confirm the input.

After determining TB information and the connection relationship among various types of TBs by using the above functions, workers can click a Gen (generation) button to obtain a topology file recorded with TB information and the connection relationship among various types of TBs. After the topology file is successfully generated, the interface will pop up to remind the workers of successful generation. As shown in Fig. 6, the content of a pop-up window can be "generate topo file successfully!".

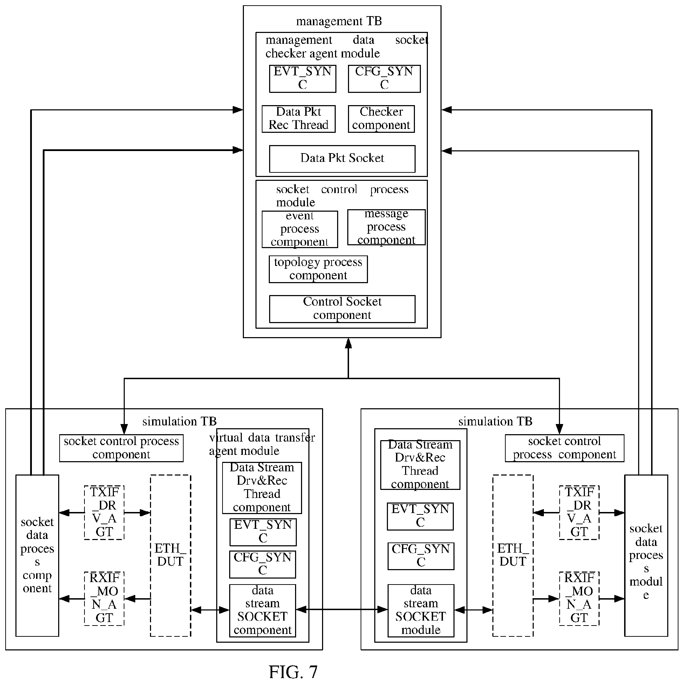

In the chip verification scheme provided by an example of the disclosure, from a software level, each type of TB contains different components or modules, and these components jointly realize the chip verification scheme provided by the example of the disclosure, which will be explained below with reference to Fig. 7.

Referring to Fig. 7, a schematic structure diagram of a second chip verification system provided by example of the disclosure is shown.

First, a management TB shown in Fig. 7 is introduced.

It can be seen that the management TB mainly includes two modules, i.e. a management data socket checker agent (master_data_socket_checker_agent) module and a socket control process (socket_control_process) module, which are respectively introduced below.

### 1. master_data_socket_checker_agent module

It includes components such as EVT_SYNC component, CFG_SYNC component, Data Pkt Rec Thread component, Checker component and Data Pkt Socket component and so on.
The Data Pkt Socket component is used to establish a service channel with a sub-TB in a Socket mode;

The EVT_SYNC component is used to synchronize events.

CFG_SYNC component is used to synchronize configuration information.

The Data Pkt Rec Thread component is used to create and maintain threads that receive service information based on the service channel, for example, receiving a simulation result or simulation input signal sent by a TB;

The Checker component is used to compare the received simulation input signal with the simulation result to determine whether the chip has passed the verification.

### 2. socket_control_process module

It includes components such as event process (EVT_Process) component, message process (Msg Process) component, topology process (Topo Process) component and Control Socket component and so on.
The Control Socket component is used to establish a control channel with a sub-TB in a Socket mode;

The EVT_Process component and Msg Process component are used to send events and messages to the sub-TB based on the control channel, including message processing and distribution, event processing and distribution and so on.

The Topo process component is used to parse a topology file stored locally.

Then take a sub-TB on the bottom left as an example to introduce the sub-TB.

It can be seen that the sub-TB contains a virtual data transfer agent (virtual_data_transfer_agent) module and its components, which are respectively introduced below.

### 1. ETH_DUT

It indicates a local sub-DUT file locally deployed for the sub-TB.

### 2. TXIF_DRV_AGT component

It sends an interface timing received through the service channel to ETH_DUT as an excitation signal in a DVA TX direction. The DVA TX direction is a predefined direction, which indicates a direction from left to right in the figure.

### 3. RXIF_MON_AGT component

It collects an interface timing generated by ETH_DUT in a DVA RX direction, and convert it into information of the service channel. The DVA RX direction is a predefined direction, which indicates a direction from right to left in the figure.

### 4. virtual_data_transfer_agent module

It includes components such as Data Stream Drv&Rec Thread component, EVT_SYNC component, CFG_SYNC component, data stream SOCKET (DATA_SREAM SOCKET) component and so on.
The DATA_SREAM SOCKET component is used to establish a data channel with adjacent sub-TBs in a Socket mode;

The EVT_SYNC component is used to synchronize events.

The CFG_SYNC component is used to synchronize configuration information.

The Data Stream Drv&Rec Thread component is used to create and maintain threads that receive or send data based on the data channel.

### 5. socket control process (socket_control_process) component

It is used to receive a control message sent by the management TB and send information and events of a current sub-TB to the management TB for processing based on a communication between the control channel and the management TB. The information and events of the current sub-TB can be TB information, information for synchronization and so on.

### 6. socket data process (socket_data_process) component

It is used to send to the management TB the excitation signal in the DVA TX direction generated by the TXIF_DRV_AGT component and the interface timing information generated in the DVA RX direction collected by the RXIF_MON_AGT component.

Components represented by rectangular boxes other than dotted rectangular boxes in Fig. 7 can all be called DVA (Distributed Verification Acceleration) components.

It can be seen that the chip verification scheme provided by an example of the disclosure can be realized based on the DVA components by integrating the DVA components in the management TB and the sub-TB, which will be explained in detail by examples below.

For example, after a BT (Block Testbench) level verification for a chip in the prior art is finished, the above components are integrated into TBs used in each BT level verification process, so that an IT(Integration Testbench) level or ST (SoC Testbench) level verification can be directly carried out, without rebuilding a dedicated environment for the IT level or ST level verification. In this way, the IT and ST level verification can be started more quickly, thus improving an efficiency of the chip verification.

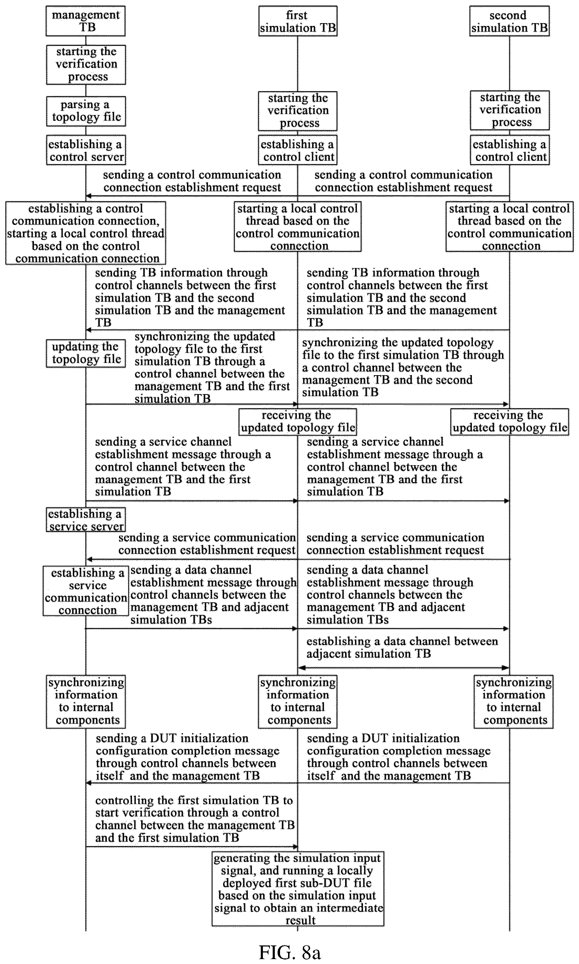

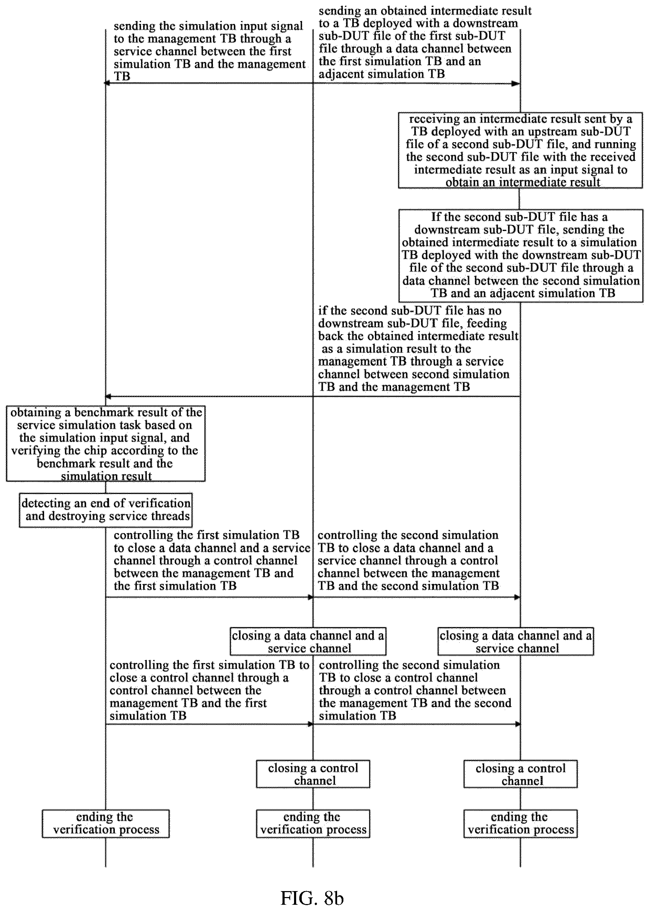

Next, a chip verification process provided by an example of the disclosure will be described with reference to specific examples shown in Figs. 8a and 8b.

Referring to Figs. 8a and 8b, a signaling interaction diagram of a fourth chip verification method provided by an example of the disclosure is shown, in which a first simulation TB and a second simulation TB are both sub-TBs. The first simulation TB corresponds to the head TB, and the second simulation TB is a sub-TB other than the head TB, which can be the intermediate TB or the tail TB.

The chip verification methods shown in Figs. 8a and 8b will be described from the perspective of execution timing of each type of TB below. The following mentioned Tn and Tn+1 only indicate a sequence of block execution.

T1: the management TB starts the verification process.

In this block, the management TB starting the verification process can be understood as the management TB prepares to establish various transmission channels so as to prepare for the execution of a service simulation task.

T2: the management TB parses a topology file, and the first simulation TB and the second simulation TB start the verification process.

In this block, the first simulation TB and the second simulation TB starting the verification process can be understood as the first simulation TB and the second simulation TB start running their locally deployed sub-DUT files in parallel, but a simulation input signal has not been generated yet at this time, so each sub-TB will not generate a running result for the simulation input signal.

T3: the management TB establishes a control server.

T4: the first simulation TB and the second simulation TB establish a control client.

It can be seen from T1-T2 that the management TB starts the verification process before the first simulation TB and the second simulation TB. In this way, the management TB can establish the control server in advance, so that the first simulation TB and the second simulation TB can directly connect to the server after establishing the control client.

T5: the first simulation TB and the second simulation TB send a control communication connection establishment request to the management TB.

T6: the management TB establishes a control communication connection, starts a local control thread based on the control communication connection, and the first simulation TB and the second simulation TB start a local control thread based on the control communication connection.

That is, control channels between the management TB and the first simulation TB and the second simulation TB are established.

T7: The first simulation TB and the second simulation TB send TB information through control channels between the first simulation TB and the second simulation TB and the management TB.

T8: The management TB updates the topology file based on the TB information.

T9: The management TB synchronizes the updated topology file to the first simulation TB through a control channel between the management TB itself and the first simulation TB, and synchronizes the updated topology file to the second simulation TB through a control channel between the management TB itself and the second simulation TB.

T10: The first simulation TB and the second simulation TB receive the updated topology file.

T11: The management TB sends a service channel establishment message through a control channel between the management TB itself and the first simulation TB, and sends the service channel establishment message through a control channel between the management TB itself and the second simulation TB.

In this block, the management TB can determine the second simulation TB for which a service channel is to be established according to a result of parsing the topology file in the block T2, and then send the service channel establishment message to the second simulation TB through the control channel with the second simulation TB.

According to the foregoing examples, the second simulation TB for which a service channel is to be established is the tail TB.

T12: The management TB establishes a service server.

T13: The first simulation TB and the second simulation TB send a service channel establishment request to the management TB.

T14: The management TB establishes a service channel.

A way for the management TB to establish the service channel in the blocks T11-T14 can be obtained on the basis of a way of establishing the control channel described in the blocks T3-T6, which will not be repeated here.

T15: The management TB sends a data channel establishment message through control channels between the management TB and adjacent simulation TBs.

In this block, the management TB can determine the adjacent simulation TBs according to the result of parsing the topology file in the block T2.

The adjacent simulation TBs correspond to the adjacent sub-TBs.

T16: A data channel is established between adjacent simulation TBs.

A specific way of establishing the data channel between the adjacent simulation TBs in the blocks T15-T16 can be obtained on the basis of a way of establishing the control channel described in the blocks T3-T6, which will not be repeated here.

T17: The management TB, the first simulation TB and the second simulation TB synchronize information to internal components.

The information synchronized between the various types of TBs can be any information needed in the verification process.

T18: The first simulation TB and the second simulation TB send a DUT initialization configuration completion message through control channels between the first simulation TB and the second simulation TB and the management TB.

T19: The management TB controls the first simulation TB to start verification through a control channel between the management TB itself and the first simulation TB.

After receiving the DUT initialization configuration completion message, the management TB can start to control the first simulation TB to start verification. At this time, the first simulation TB starts to generate the simulation input signal, and the service simulation task starts to be executed.

T20: the first simulation TB generates the simulation input signal, and runs a locally deployed first sub-DUT file based on the simulation input signal to obtain an intermediate result.

T21: The first simulation TB sends the simulation input signal to the management TB through a service channel between the first simulation TB and the management TB.

T22: The first simulation TB sends the obtained intermediate result to a simulation TB deployed with a downstream sub-DUT file of the first sub-DUT file through a data channel between the first simulation TB itself and an adjacent simulation TB.

T23: The second simulation TB receives an intermediate result sent by a simulation TB deployed with an upstream sub-DUT file of a second sub-DUT file, and runs the second sub-DUT file with the received intermediate result as an input signal to obtain an intermediate result.

T24: If the second sub-DUT file has a downstream sub-DUT file, the second simulation TB sends the obtained intermediate result to a simulation TB deployed with the downstream sub-DUT file of the second sub-DUT file through a data channel between the second simulation TB and an adjacent simulation TB.

The simulation TB deployed with the downstream sub-DUT file of the second sub-DUT file is a downstream TB of the second simulation TB.

In this block, if the second sub-DUT file has a downstream sub-DUT file, it is indicated that the second simulation TB is the intermediate TB, which can send the obtained intermediate result to a downstream TB through the data channel between the second simulation TB and the downstream TB.

T25: if the second sub-DUT file has no downstream sub-DUT file, the second simulation TB feeds back the obtained intermediate result as a simulation result to the management TB through a service channel between second simulation TB and the management TB.

In this block, if the second sub-DUT file has no downstream sub-DUT file, which indicates that the second simulation TB is the tail TB, the obtained intermediate result is the simulation result. The second simulation TB can feed back the obtained intermediate result as the simulation result to the management TB through the service channel between the second simulation TB and the management TB.

T26: The management TB obtains a benchmark result of the service simulation task based on the simulation input signal, and verifies the chip according to the benchmark result and the simulation result.

The implementation of T26 is the same as the block S206 in the example shown in Fig. 2, which will not be repeated here.

T27: The management TB detects the end of verification and destroys service threads.

T28: The management TB controls the first simulation TB to close the data channel and service channel through a control channel between the management TB and the first simulation TB, and controls the second simulation TB to close the data channel and service channel through a control channel between the management TB and the second simulation TB.

T29: The first simulation TB and the second simulation TB close the data channel and the service channel.

T30: the management TB controls the first simulation TB to close the control channel through a control channel between the management TB and the first simulation TB, and controls the second simulation TB to close the control channel through a control channel between the management TB and the second simulation TB.

T31: The first simulation TB and the second simulation TB close the control channel.

T32: The management TB, the first simulation TB and the second simulation TB end the verification process.

Corresponding to the above chip verification system, examples of the disclosure also provide chip verification methods which are respectively applied to a management TB and sub-TBs included in a simulation TB in the chip verification system, which are respectively introduced below.

Firstly, a chip verification method applied to the management TB in the chip verification system is introduced.

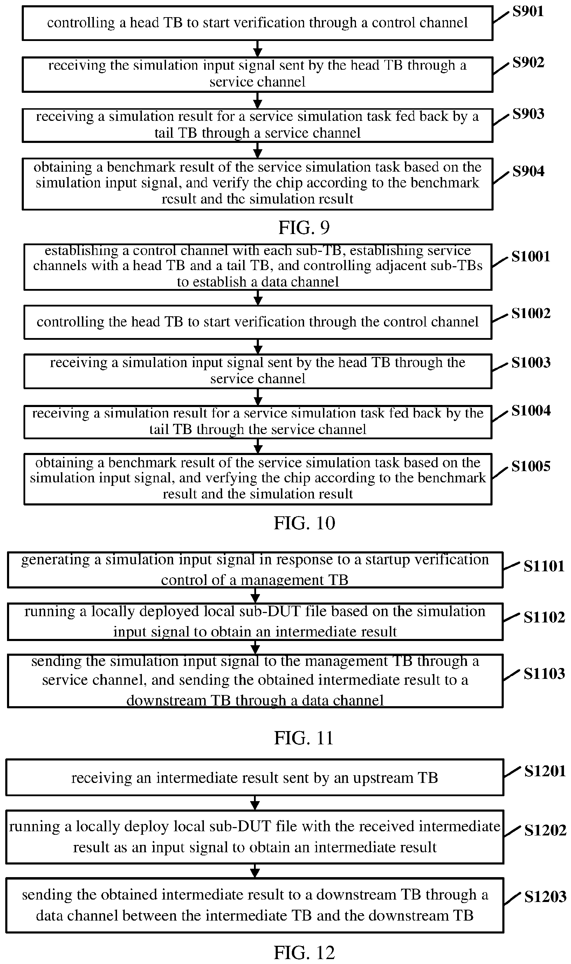

Referring to fig. 9, a flowchart of a fifth chip verification method provided by an example of the disclosure is shown, which is applied to the management TB in the chip verification system. The method includes following blocks S901-S904.

S901: controlling a head TB to start verification through a control channel.

It makes the head TB to generate a simulation input signal.

Block S902: receiving the simulation input signal sent by the head TB through a service channel.

Block S903: receiving a simulation result for a service simulation task fed back by a tail TB through a service channel.

It can be seen from the above examples of the system, after generating the simulation input signal, the head TB can input the simulation input signal into a local DUT file running locally to obtain an intermediate result, and send the obtained intermediate result to a downstream TB through a data channel. Then, an intermediate TB can obtain an intermediate result based on an intermediate result sent by an upstream TB, and send the obtained intermediate result to a downstream TB through a data channel between the intermediate TB and the downstream TB. Then, the tail TB can receive an intermediate result sent by an upstream TB, and run a locally deployed local sub-DUT file with the received intermediate result as an input signal to obtain a simulation result.

Block S904: obtaining a benchmark result of the service simulation task based on the simulation input signal, and verify the chip according to the benchmark result and the simulation result.

The implementation of the blocks S901- 904 can be obtained on the basis of the aforementioned examples shown in Figs. 2-4, and the difference is only that the execution content of the management TB is highlighted, which will not be repeated here.

It can be seen from the above that, when the scheme provided by the example of the disclosure is used for chip verification, after the management TB controls the head TB to start verification, the simulation input signal sent by the head TB through the service channel and the simulation result fed back by the tail simulation TB through the service channel can be received, so that the benchmark result of the service simulation task can be obtained based on the simulation input signal, and the chip can be verified according to the benchmark result and the simulation result. In the process of chip verification, the simulation result of the chip is jointly obtained by a plurality of sub-TBs including the head TB and the tail TB. During obtaining of the simulation result, the respective sub-TBs are executed in parallel. A process of running the DUT file to obtain the simulation result often takes a lot of computing resources and a long time. However, in the above scheme, the respective sub-TBs are executed in parallel and use its own computing resources to obtain the simulation result together, which reduces the time-consuming of obtaining the simulation result and improves the efficiency of obtaining the simulation result, thus improving an efficiency of verifying the chip based on the simulation result.

On the basis of the example shown in Fig. 9, it can be known that the control channel and the service channel need to be established before information interaction between the management TB and the sub-TB, and the data channel needs to be established before data interaction between sub-TBs. In view of the above situation, an example of the disclosure provides a sixth chip verification method.

Referring to Fig. 10, a schematic flowchart of the sixth chip verification method provided by the example of the disclosure is shown, which is applied to a management TB. The method includes following blocks S1001-S1005.

S1001: establishing a control channel with each sub-TB, establishing a service channel with a head TB and a tail TB, and controlling adjacent sub-TBs to establish a data channel.

A specific way of establishing the above transmission channel has been explained in the aforementioned example shown in Fig. 4, and the difference is that this block highlights the implementation content of management TB, which is briefly described below.

Firstly, a way of establishing a control channel between a management TB and each sub-TB is explained.

Specifically, after receiving a connection request sent by a control client established by the sub-TB, the management TB establishes a control communication connection with the control client and starts a local control thread based on the control communication connection.

It can be seen that both the management TB and each sub-TB have established control threads locally based on the control communication connection, so that the control threads can be dedicated to receiving and sending a control message between the management TB and each sub-TB. In this way, the control message interaction will not be confused with other information, which is beneficial to improving the efficiency of control message interaction between the management TB and each sub-TB.

Then, a way of establishing the service channel between the management TB and the head TB and the tail TB is explained.

Specifically, the management TB establishes a service server. After receiving connection requests sent by the head TB and the tail TB, the management TB establishes service communication connections with the head TB and the tail TB, and starts a local service thread based on the service communication connections.

It can be seen that the management TB has established service threads locally based on the service communication connections, so that the service thread can be dedicated to receiving and sending service information between the management TB, the head TB and the tail TB. In this way, the service information interaction will not be confused with other types of information, which is conducive to improving an efficiency of service information interaction between the management TB, the head TB and the tail TB.

Finally, a way that the management TB controls the adjacent sub-TB to establish the data channel is explained.

Specifically, the management TB can obtain a topology file, receive TB information sent by each sub-TB through a control channel between each sub-TB itself and the management TB, update the topology file according to the received TB information, determine adjacent sub-TBs based on the updated topology file, then send a control message to an adjacent sub-TB through a control channel between the management TB and the determined adjacent sub-TB, and synchronize the updated topology file to each sub-TB, so that the adjacent sub-TB receiving the control message establishes a data channel with another adjacent sub-TB based on the received topology file.

It can be seen that the management TB can determine adjacent sub-TBs according to the updated topology file, then synchronize the updated topology file to each sub-TB, and instruct the adjacent sub-TBs to establish a data channel, so that a sub-TB can accurately determine a sub-TB adjacent to itself based on the updated topology file and establish a data channel with this sub-TB. In addition, the data thread can be dedicated to receiving and sending data between adjacent sub-TBs, so that the data interaction will not be confused with other types of information, which is beneficial to improving the efficiency of data interaction between adjacent sub-TBs.

Block S 1002: controlling the head TB to start verification through the control channel.

Block S1003: receiving a simulation input signal sent by the head TB through the service channel.

S1004: receiving a simulation result for the service simulation task fed back by the tail TB through the service channel.

S1005: obtaining a benchmark result of the service simulation task based on the simulation input signal, and verfying the chip according to the benchmark result and the simulation result.

The implementation of the blocks S1002-S1005 can be obtained on the basis of the examples shown in Figs. 2-4, and the difference is only that the execution content of the management TB is highlighted, which will not be repeated here.

It can be seen from the above that the management TB establishes a control channel with each sub-TB, a service channel with the head TB and the tail TB, and controls the adjacent sub-TBs to establish a data channel. These different types of transmission channels can be used for transmission services of different types of information or data. In this way, transmission services of different dimensions can be separated from each other, which is conductive to avoiding confusion among different transmission services and improving the transmission efficiency of information and data.

In an example of the disclosure, the above block further includes: the management TB sends a verification end message to each sub-TB through a control channel between the management TB itself and each sub-TB after determining that the verification for chip is ended, so that each sub-TB closes the service channel and the control channel with the management TB and the data channel between adjacent sub-TBs.

In this way, the management TB can timely control the sub-TB to disconnect a control channel and service channel with the management TB, and control adjacent sub-TBs to disconnect a data channel after determining that the verification for chip is ended, thus releasing memory occupied by the transmission channels in time.

A chip verification method that is applied to a sub-TB of sub-TBs included in a simulation TB in a chip verification system is introduced below.

It can be seen from the foregoing examples that a sub TB can be a head TB, an intermediate TB or a tail TB, which will be described below with reference to Figs. 11- 13 respectively.

Referring to Fig. 11, a schematic flowchart of a seventh chip verification method provided by an example of the disclosure is shown, which is applied to the head TB. The method includes following blocks S1101- S1103.

Block S1101: generating a simulation input signal in response to a startup verification control of a management TB.

Block S1102: running a locally deployed local sub-DUT file based on the simulation input signal to obtain an intermediate result.

Block S1103: sending the simulation input signal to the management TB through a service channel, and sending the obtained intermediate result to a downstream TB through a data channel.

The implementation of the blocks S1101- S 1103 can be obtained on the basis of the examples shown in Figs. 2-4, and the difference is only that the execution content of the head TB is highlighted, which will not be repeated here.

Referring to Fig. 12, a schematic flowchart of an eighth chip verification method provided by an example of the disclosure is shown, which is applied to an intermediate TB. The method includes following blocks S1201-S1203.

Block S1201: receiving an intermediate result sent by an upstream TB.

Block S1202: running a locally deploy local sub-DUT file with the received intermediate result as an input signal to obtain an intermediate result.

Block S1203: sending the obtained intermediate result to a downstream TB through a data channel between the intermediate TB and the downstream TB.

The implementation of blocks S1201-S1203 can be obtained on the basis of the examples shown in Figs. 2-4, and the difference is only that the execution content of the intermediate TB is highlighted, which will not be repeated here.

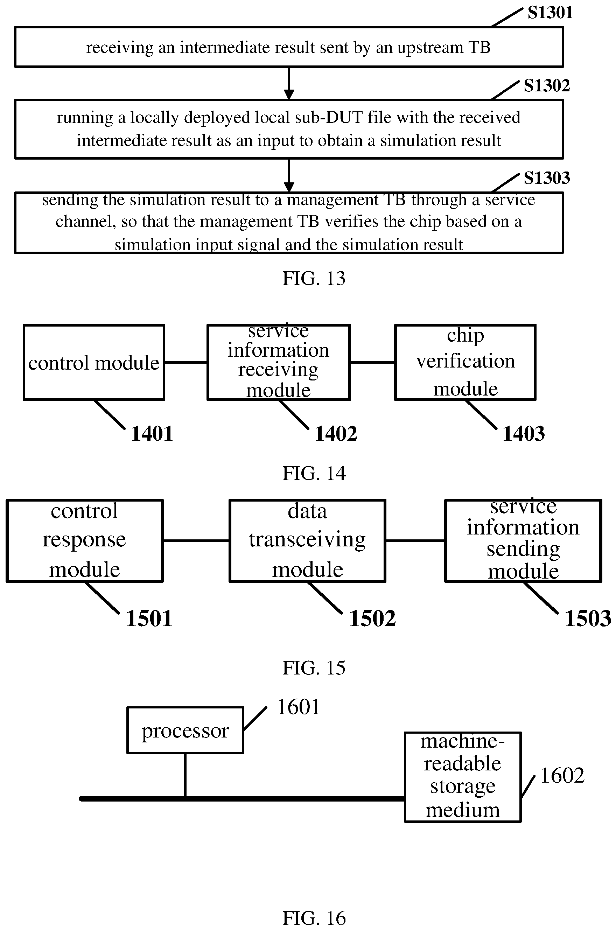

Referring to Fig. 13, a schematic flowchart of a ninth chip verification method provided by an example of the disclosure is shown, which is applied to a tail TB. The method includes following blocks S1301-S1303.

Block S1301: receiving an intermediate result sent by an upstream TB.

Block S1302: running a locally deployed local sub-DUT file with the received intermediate result as an input to obtain a simulation result.

Block S1303: sending the simulation result to a management TB through a service channel, so that the management TB verifies the chip based on the simulation input signal and the simulation result.

The implementation of the blocks S1301- S1303 can be obtained on the basis of the examples shown in Figs. 2- 4, and the difference is only that the execution content of the tail TB is highlighted, which will not be repeated here.

According to the examples shown in Figs. 11-13, in a process of chip verification, the simulation result of the chip are jointly obtained by the head TB, the intermediate TB and the tail TB. After each sub-TB obtains an intermediate result, on the one hand, each sub-TB sends the obtained intermediate result to its downstream simulation TB, so that its downstream TB can obtain a new intermediate result based on the received intermediate result; on the other hand, each sub-TB can continue to run the locally deployed sub-DUT file to obtain an intermediate result. That is, during obtaining of the simulation result, the respective sub-TB are executed in parallel. A process of running the DUT file to obtain the simulation result often takes a lot of computing resources and a long time. However, in the above scheme, the respective sub-TB are executed in parallel and use its own computing resources to obtain the simulation result together, which reduces the time-consuming of obtaining the simulation result and improves an efficiency of obtaining the simulation result, thus improving the efficiency of verifying the chip based on the simulation result.

Furthermore, the head TB and the tail TB respectively feed back the simulation input signal and the simulation result to the management TB through a service channel, and each sub TB sends the obtained intermediate result to other sub-TBs through a data channel. From the above, it can be seen that different types of information or data are transmitted through the different types of transmission channels, so that transmission services of different dimensions can be separated from each other, which is conducive to avoiding confusion among different transmission services and improving the transmission efficiency of information and data.

In an example of the disclosure, before the head TB generates the simulation input signal, it further includes following blocks:
each sub-TB establishes a control channel with the management TB. If the sub-TB is the head TB or the tail TB, a service channel is established with the management TB. Each sub-TB establishes a data channel with adjacent sub-TBs.

In this way, different types of information or data can be transmitted through the different types of transmission channels, so that transmission services of different dimensions can be separated from each other, which is conducive to avoiding confusion among different transmission services and improving the transmission efficiency of information and data.

A way of establishing the above various types of transmission channels is explained below.

The specific way of establishing the transmission channels has been explained in the example shown in Fig. 4, and will be briefly described below.

Firstly, a way of establishing a control channel between each sub-TB and a management TB is explained.

Specifically, each sub-TB establishes a control client. After successfully establishing the control client, each sub-TB establishes a control communication connection with a control server established by the management TB, and starts a local control thread based on the control communication connection.

It can be seen that each sub-TB has established a control thread locally based on the control communication connection, so that the control thread can be dedicated to receiving and sending a control message between the management TB and each sub-TB. In this way, the control message interaction will not be confused with other types of information, which is beneficial to improving the efficiency of control message interaction between the management TB and each sub-TB.

Then, a way of establishing a service channel between the head TB, the tail TB and the management TB is explained.

Specifically, the head simulation TB and the tail TB can establish service communication connections with the management TB, and start local service threads based on the service communication connections.

It can be seen that the head TB and the tail TB have established service threads locally based on the service communication connections, so that the service threads can be dedicated to receiving and sending service information between the management TB, the head TB and the tail TB. In this way, the service information interaction will not be confused with other types of information, which is conducive to improving the efficiency of service information interaction between the management TB, the head TB and the tail TB.

Finally, a way of establishing a data channel between adjacent sub-TBs is explained.

Specifically, each sub-TB sends TB information to the management TB through a control channel between each sub-TB and the management TB, receives a topology file updated based on the TB information sent by the management TB, determines adjacent sub-TBs based on the topology file, then establishes a data communication connection with the determined adjacent sub-TB, and starts a local data thread according to the data communication connection.

It can be seen that each sub-TB can accurately determine sub-TBs adjacent to itself based on the updated topology file sent by the management TB, and establish a data channel with the sub-TBs. In addition, the data thread can be dedicated to receiving and sending data between each sub-TB and the adjacent sub-TBs, so that the data interaction will not be confused with other types of information, which is beneficial to improving the efficiency of data interaction between the adjacent sub-TBs.

In an example of the disclosure, after the management TB verifies the chip based on the simulation input signal and the simulation result, each sub-TB closes the service channel with the management TB, the data channel with the adjacent sub-TBs and the control channel with the management TB in response to a verification end message sent by the management TB through a control channel between the management TB and each of sub-TBs.

In this way, each sub-TB can disconnect the control channel and service channel with the management TB and the data channel with the adjacent sub-TB in time after determining that the verification for chip is ended, so that memory occupied by the transmission channels can be released in time.

Corresponding to the above chip verification system, examples of the disclosure also provide chip verification devices which are respectively applied to a management TB and a simulation TB, which are respectively introduced below.

Referring to Fig. 14, a schematic structure diagram of a first chip verification device provided by an example of the disclosure is shown. The device includes following modules:
a control module 1401 to control a head TB to start verification through a control channel, so that the head TB generates a simulation input signal, wherein the head TB is a sub-TB deployed with a first sub-DUT file for a service simulation task;
a service information receiving module 1402 to receive the simulation input signal sent by the head TB through a service channel and receive a simulation result of the service simulation task fed back by a tail TB through a service channel, wherein the tail TB is a sub-TB deployed with a last sub-DUT file for the service simulation task;
a chip verification module 1403 to obtain a benchmark result of the service simulation task based on the simulation input signal, and verify the chip according to the benchmark result and the simulation result.

It can be seen from the above that, when the scheme provided by the example of the disclosure is used for chip verification, the management TB controls the head TB to start verification, and then the management TB can receive the simulation input signal sent by the head TB through a service channel and the simulation result fed back by the tail simulation TB through a service channel, so that the benchmark result of the service simulation task can be obtained based on the simulation input signal, and the chip can be verified according to the benchmark result and the simulation result. In a process of chip verification, the simulation result of the chip is jointly obtained by a plurality of sub-TBs including the head TB and the tail TB. During obtaining of the simulation result, the respective sub-TB are executed in parallel. A process of running the DUT file to obtain the simulation result often takes a lot of computing resources and a long time. However, in the above scheme, the respective sub-TB are executed in parallel and use its own computing resources to obtain the simulation result together, which reduces the time-consuming of obtaining the simulation result and improves an efficiency of obtaining the simulation result, thus improving the efficiency of verifying the chip based on the simulation result.

In an example of the disclosure, the device further includes:
a channel establishment module, specifically to establish a control channel with each sub-TB, establish a service channel with the head TB and the tail TB, and control adjacent sub-TBs to establish a data channel, wherein sub-DUT files deployed for the adjacent sub-TBs have an upstream-downstream relationship.

It can be seen from the above that the management TB establishes a control channel with each sub-TB, a service channel with the head TB and the tail TB, and controls the adjacent sub-TBs to establish a data channel. These different types of transmission channels can be used for transmission services of different types of information or data. In this way, transmission services of different dimensions can be separated from each other, which is conductive to avoiding confusion among different transmission services and improving the transmission efficiency of information and data.

In an example of the disclosure, the channel establishing module is specifically to establish a control server; after receiving a connection request sent by a control client established by a sub-TB, establish a control communication connection with the control client; start a local control thread based on the control communication connection.

It can be seen that both the management TB and each sub-TB have established control threads locally based on the control communication connection, so that the control threads can be dedicated to receiving and sending a control message between the management TB and each sub-TB. In this way, the control message interaction will not be confused with other information, which is beneficial to improving the efficiency of control message interaction between the management TB and each sub-TB.

In an example of the disclosure, the channel establishment module is specifically to obtain a topology file; receive TB information sent by each sub-TB through a control channel between each sub-TB and the management TB; update the topology file according to the received TB information; determine adjacent sub-TBs with deployed sub-DUT files having a upstream-downstream relationship based on the updated topology file; send a control message to an adjacent sub-TB through a control channel between itself and the determined adjacent sub-TB, and synchronize the updated topology file to each sub-TB, so that this adjacent sub-TB receiving the control message establishes a data channel with an adjacent sub-TB based on the received topology file.

It can be seen that the management TB can determine the adjacent sub-TBs according to the updated topology file, then synchronize the updated topology file to each sub-TB, and instruct to establish a data channel between the adjacent sub-TBs, so that a sub-TB can accurately determine a sub-TB adjacent to itself based on the updated topology file and establish a data channel with the sub-TB. In addition, the data thread can be dedicated to receiving and sending data between adjacent sub-TBs, so that the data interaction will not be confused with other information, which is beneficial to improving the efficiency of data interaction between adjacent sub-TBs.

In an example of the disclosure, the channel establishing module is specifically to establish a service server; establish service communication connections with the head TB and the tail TB after receiving a connection request sent by the head TB and the tail TB; start a local service thread based on the service communication connections.

It can be seen that the management TB has established service threads locally based on the service communication connections, so that the service thread can be dedicated to receiving and sending service information between the management TB, the head TB and the tail TB. In this way, the service information interaction will not be confused with other information, which is conducive to improving the efficiency of service information interaction between the management TB, the head TB and the tail TB.

In an example of the disclosure, the device further includes:
an end message sending module to send a verification end message to each sub-TB through a control channel between itself and each sub-TB after determining that the verification for chip is ended, so that each sub-TB closes a service channel and a control channel with the management TB and a data channel between adjacent sub-TBs.

In this way, the management TB can timely control the sub-TB to disconnect the control channel and service channel, and control an adjacent sub-TBs to disconnect a data channel after determining that the verification for chip is ended, thus releasing the memory occupied by the transmission channels in time.

Referring to Fig. 15, a schematic structure diagram of a second chip verification device provided by an example of the disclosure is shown, which is applied to a sub-TB of sub-TBs included in a simulation TB in a chip verification system. The device includes:
a control response module 1501 to generate, if the simulation TB is a head TB, a simulation input signal in response to a startup verification control of a management TB, and run a locally deployed local sub-DUT file based on the simulation input signal to obtain an intermediate result, wherein the head TB is a sub-TB deployed with a first sub-DUT file for a service simulation task;
a data transceiving module 1502 to send, if the simulation TB is the head TB, the obtained intermediate result to a downstream TB through a data channel; if the sub-TB is an intermediate TB, receive an intermediate result sent by an upstream TB, run a deployed locally local sub-DUT file with the received intermediate result as an input to obtain an intermediate result, and send the obtained intermediate result to a downstream TB through a data channel between the sub-TB and the downstream TB; if the sub-TB is a tail TB, receive an intermediate result sent by an upstream TB, and run a deployed locally local sub-DUT file with the received intermediate result as an input to obtain a simulation result, wherein the tail TB is a sub-TB deployed with a last sub-DUT file for the service simulation task, the intermediate TB is a sub-TB other than the head TB and the tail TB, a sub-DUT file deployed for a downstream TB is a downstream sub-DUT file of the local sub-DUT file, and a sub-DUT file deployed for the upstream TB is a upstream sub-DUT file of the local sub-DUT file.
a service information sending module 1503 to send, if the simulation TB is the head TB, the simulation input signal to the management TB through a service channel; if the sub-TB is the tail TB, send the simulation result to the management TB through a service channel, so that the management TB verifies the chip based on the simulation input signal and the simulation result.

According to the above, in a process of chip verification, the simulation result of the chip is obtained by the head TB, the intermediate TB and the tail TB together. After each sub-TB obtains an intermediate result, on the one hand, each sub-TB sends the obtained intermediate result to its downstream simulation TB, so that its downstream TB can obtain a new intermediate result based on the received intermediate result; on the other hand, each sub-TB can continue to run a locally deployed sub-DUT file to obtain an intermediate result. That is, during obtaining of the simulation result, the respective sub-TBs are executed in parallel. A process of running the DUT file to obtain the simulation result often takes a lot of computing resources and a long time. However, in the above scheme, the respective sub-TBs are executed in parallel and use its own computing resources to obtain the simulation result together, which reduces the time-consuming of obtaining the simulation result and improves the efficiency of obtaining the simulation result, thus improving the efficiency of verifying the chip based on the simulation result.

Furthermore, the head TB and the tail TB respectively feed back the simulation input signal and the simulation result to the management TB through the service channel, and each sub-TB sends the obtained intermediate result to other sub-TBs through a data channel. From the above, it can be seen that different types of information or data are transmitted through the different types of transmission channels, so that transmission services of different dimensions can be separated from each other, which is conducive to avoiding confusion among different transmission services and improving the transmission efficiency of information and data.

In an example of the disclosure, before the control response module 1501, the device further includes:
a control channel establishing module to establish a control channel with the management TB;
a service channel establishing module to establish a service channel with the management TB if the sub-TB is the head TB or the tail TB;
a data channel establishing module to establish a data channel with an adjacent sub-TB, wherein sub-DUT files deployed for adjacent sub-TBs have an upstream-downstream relationship.

In this way, each sub-TB can disconnect the control channel and service channel with the management TB and disconnect the data channel with adjacent sub-TBs in time after determining that the verification for chip is ended, so that memory occupied by the transmission channels can be released in time.

In an example of the disclosure, the control channel establishing module is specifically to establish a control client; after successfully establishing the control client, establish a control communication connection with a control server established by the management TB; start a local control thread based on the control communication connection.

It can be seen that each sub-TB has established a control thread locally based on the control communication connection, so that the control thread can be dedicated to receiving and sending a control message between the management TB and each sub-TB. In this way, the control message interaction will not be confused with other information, which is beneficial to improving the efficiency of control message interaction between the management TB and each sub-TB.

In an example of the disclosure, the data channel establishment module is specifically to send TB information to the management TB through a control channel between itself and the management TB; receive the topology file updated based on TB information sent by the management TB; determine an adjacent sub-TB based on the topology file; establish a data communication connection with a determined adjacent sub-TB; start a local data thread according to the data communication connection.

It can be seen that each sub-TB can accurately determine a sub-TB adjacent to itself based on the updated topology file sent by the management TB, and establish a data channel with the sub-TB. In addition, the data thread can be dedicated to receiving and sending data between each sub-TB and the adjacent sub-TB, so that the data interaction will not be confused with other information, which is beneficial to improving the efficiency of data interaction between adjacent sub-TBs.

In an example of the disclosure, the service channel establishment module is specifically to establish a service communication connection with a service server established by the management TB if the simulation TB is the head TB or the tail TB; start a local service thread based on the service communication connection.

It can be seen that the head TB and the tail TB have established service threads locally based on the service communication connection, so that the service threads can be dedicated to receiving and sending service information between the management TB and the head TB and the tail TB. In this way, the service information interaction will not confused with other information, which is beneficial to improving the efficiency of service information interaction between the management TB and the head TB and the tail TB.

In an example of the disclosure, the device further includes:
a channel closing module to close a service channel with the management TB, a data channel with an adjacent sub-TB and a control channel with the management TB in response to a verification end message sent by the management TB through a control channel between the management TB and each of sub-TBs.

In this way, each sub-TB can disconnect the control channel and service channel with the management TB and disconnect a data channel with an adjacent sub-TB in time after determining that the verification for chip is ended, so that memory occupied by the transmission channels can be released in time.

An example of the disclosure also provides a verification platform as shown in Fig. 16, including a processor 1601 and a machine-readable storage medium 1602, wherein the machine-readable storage medium 1602 stores machine-executable instructions that can be executed by the processor, and the machine-executable instructions cause the processor 1601 to implement the chip verification method applied to a management TB or the chip verification method applied to a simulation TB.

The machine-readable storage medium may include Random Access Memory (RAM) or Non-Volatile Memory (NVM), such as at least one disk memory. Optionally, the memory can also be at least one storage device located far away from the processor.

The processor can be a general-purpose processor, including a Central Processing Unit (CPU), a Network Processor (NP), etc. The processor can also be a Digital Signal Processor (DSP), an application specific integrated circuit (ASIC), a Field-Programmable Gate Array (FPGA) or other programmable logic devices, discrete gate or transistor logic devices, and discrete hardware components.

An example of the disclosure also provides a computer readable storage medium, which stores machine executable instructions, which, when called and executed by a processor, cause the processor to implement the chip verification method applied to a management TB or the chip verification method applied to a simulation TB.

An example of the disclosure also provides a computer program product containing instructions, which, when run on a computer, cause the computer to execute the chip verification method applied to a management TB or the chip verification method applied to a simulation TB.

The above descriptions are only preferred examples of the disclosure, and are not intended to limit the disclosure. Any modifications, equivalent replacements, improvements and the like made within the spirit and principles of the disclosure shall be included within the scope of protection of the disclosure.

## Claims

1. A chip verification system, comprising: a management TestBench TB and a simulation TB, wherein the simulation TB comprises a plurality of sub-TBs, and each of the sub-TBs is deployed with a different sub-DUT file of sub-DUT files of a Design Under Test DUT file of a chip, wherein,
the management TB is to control a head TB to start verification through a control channel, wherein the head TB is a sub-TB deployed with a first sub-DUT file for a service simulation task;
the head TB is to generate a simulation input signal and send the simulation input signal to the management TB through a service channel;
each of the sub-TBs is to run a locally deployed sub-DUT file to obtain an intermediate result, and send the obtained intermediate result to other sub-TBs through a data channel;
a tail TB is to obtain a simulation result for the service simulation task and send the simulation result to the management TB through a service channel, wherein the tail TB is a sub-TB deployed with a last sub-DUT file for the service simulation task;
the management TB is further to obtain a benchmark result of the service simulation task based on the simulation input signal, and verify the chip according to the benchmark result and the simulation result.

2. The system according to claim 1, wherein,
the head TB is specifically to run a locally deployed local sub-DUT file based on the simulation input signal to obtain an intermediate result; send the obtained intermediate result to a downstream TB through a data channel between the head TB and the downstream TB, wherein a sub-DUT file deployed for the downstream TB is a downstream sub-DUT file of the local sub-DUT file;
an intermediate TB is to receive an intermediate result sent by an upstream TB, run a locally deployed local sub-DUT file with the received intermediate result as an input signal to obtain an intermediate result, and send the obtained intermediate result to a downstream TB through a data channel between the intermediate TB and the downstream TB, wherein a sub-DUT file deployed for the upstream TB is an upstream sub-DUT file of the local sub-DUT file, and the intermediate TB is a sub-TB other than the head TB and the tail TB;
the tail TB is specifically to receive an intermediate result sent by an upstream TB, and run a locally deployed local sub-DUT file with the received intermediate result as an input signal to obtain a simulation result.

3. The system according to claim 1, wherein,
the management TB is specifically to establish a control server;
each of the sub- TBs is specifically to establish a control client, and establish a control communication connection with the control server after successfully establishing the control client, and start a local control thread based on the control communication connection;
the management TB is specifically to start a local control thread based on the control communication connection.

4. The system according to claim 1, wherein,
each of the sub-TBs is specifically to send TB information to the management TB through a control channel between each of the sub-TBs and the management TB;
the management TB is specifically to obtain a topology file, update the topology file according to the received TB information, determine an adjacent sub-TB based on the updated topology file, send a control message to the determined adjacent sub-TB through a control channel between the management TB and the adjacent sub-TB, and synchronize the updated topology file to each of the sub-TBs, wherein the topology file is to record a topology relationship between the management TB and each of the sub-TBs, TB information of the management TB and TB information of each of the sub-TBs, and sub-DUT files deployed for adjacent sub-TBs have an upstream-downstream relationship;
the adjacent sub-TB is specifically to establish a data communication connection with another adjacent sub-TB based on the received topology file in response to the control message, and start a local data thread according to the data communication connection.

5. The system according to claim 2, wherein,
the management TB is specifically to establish a service server;
the head TB and the tail TB are specifically to establish service communication connections with the service server, and start local service threads based on the service communication connections;
the management TB is specifically to start a local service thread based on the service communication connections.

6. The system according to any one of claims 2-5, wherein,
the management TB is further to send a verification end message to each of the sub-TBs through a control channel between the management TB and each of the sub-TBs after determining that the verification for chip is ended;
each of the sub-TBs is further to close the service channel with the management TB, the data channel with adjacent sub-TBs and the control channel with the management TB in response to the verification end message.

7. The system according to any one of claims 2-5, wherein,
data transmitted through the control channel is data in a Type-Length-Value TLV format; and/or
data transmitted through the service channel is a variable-length packet in a dynamic array format; and/or
data transmitted through the data channel is data in a Signal Based SB mode or TB mode.

8. A chip verification method, which is applied to a management TestBench TB in a chip verification system, wherein the chip verification system further comprises a simulation TB, the simulation TB comprises a plurality of sub-TBs, and each of the sub-TBs is deployed with a different sub-DUT file of sub-DUT files of a Design Under Test DUT file of a chip;
the method comprises:
controlling a head TB to start verification through a control channel, so that the head TB generates a simulation input signal, wherein the head TB is a sub-TB deployed with a first sub-DUT file for a service simulation task;
receiving the simulation input signal sent by the head TB through a service channel;
receiving a simulation result for the service simulation task fed back by a tail TB through a service channel, wherein the tail TB is a sub-TB deployed with a last sub-DUT file for the service simulation task;
obtaining a benchmark result of the service simulation task based on the simulation input signal, and verifying the chip according to the benchmark result and the simulation result.

9. The method according to claim 8, wherein before controlling a head TB to start verification through a control channel, the method further comprises:
establishing a control channel with each of the sub-TBs, establishing service channels with the head TB and the tail TB, and controlling adjacent sub-TBs to establish a data channel, wherein sub-DUT files deployed for adjacent sub-TBs have an upstream-downstream relationship.

10. The method according to claim 9, wherein establishing a control channel with each of the sub-TBs comprises: establishing a control server; after receiving a connection request sent by a control client established by a sub-TB, establishing a control communication connection with the control client; starting a local control thread based on the control communication connection;
or
wherein controlling adjacent sub-TBs to establish a data channel comprises: obtaining a topology file; receiving TB information sent by each of the sub-TBs through a control channel between each of the sub-TBs and the management TB; updating the topology file according to the received TB information; determining an adjacent sub-TB based on an updated topology file; sending a control message to the adjacent sub-TB through a control channel between the management TB and the determined adjacent sub-TB, and synchronizing the updated topology file to each of the sub-TBs, so that the adjacent sub-TB receiving the control message establishes a data channel with another adjacent sub-TB based on the received topology file;
or
wherein establishing service channels with the head TB and the tail TB comprises: establishing a service server; establishing service communication connections with the head TB and the tail TB after receiving connection requests sent by the head TB and the tail TB; starting local service threads based on the service communication connections;
or
the method further comprises: sending a verification end message to each of the sub-TBs through a control channel between the management TB and each of the sub-TBs after determining that the verification for chip is ended, so that each of the sub-TBs closes the service channel and the control channel with the management TB, and the data channels with adjacent sub-TBs.

11. A chip verification method, which is applied to a sub-TB of sub-TBs comprised in a simulation TestBench TB in a chip verification system, wherein the chip verification system further comprises a management TB, and each of the sub-TBs is deployed with a different sub-DUT file of sub-DUT files of a Design Under Test DUT file of a chip;
the method comprises:
if the sub-TB is a head TB, in response to a startup verification control of the management TB, generating a simulation input signal, and running a locally deployed local sub-DUT file based on the simulation input signal to obtain an intermediate result; sending the simulation input signal to the management TB through a service channel, and sending the obtained intermediate result to a downstream TB through a data channel, wherein a sub-DUT file deployed for the downstream TB is a downstream sub-DUT file of the local sub-DUT file, and the head TB is a sub-TB deployed with a first sub-DUT file for a service simulation task;
if the sub-TB is an intermediate TB, receiving an intermediate result sent by an upstream TB, running a locally deployed local sub-DUT file with the received intermediate result as an input to obtain an intermediate result, and sending the obtained intermediate result to a downstream TB through a data channel between the intermediate TB and the downstream TB, wherein a sub-DUT file deployed for the upstream TB is an upstream sub-DUT file of the local sub-DUT file, and the intermediate TB is a sub-TB other than the head TB and the tail TB;
if the sub-TB is a tail TB, receiving an intermediate result sent by an upstream TB, running a locally deployed local sub-DUT file with the received intermediate result as an input to obtain a simulation result, and sending the simulation result to the management TB through a service channel, so that the management TB verifies the chip based on the simulation input signal and the simulation result, wherein the tail TB is a sub-TB deployed with a last sub-DUT file for the service simulation task.

12. The method according to claim 11, wherein before generating a simulation input signal, the method further comprises:
establishing a control channel with the management TB;
if the sub-TB is the head TB or the tail TB, establishing a service channel with the management TB;
establishing a data channel with an adjacent sub-TB, wherein sub-DUT files deployed for adjacent sub-TBs have an upstream-downstream relationship.

13. The method according to claim 12, wherein,
wherein establishing a control channel with the management TB comprises: establishing a control client; after successfully establishing the control client, establishing a control communication connection with a control server established by the management TB; starting a local control thread based on the control communication connection;
or
wherein establishing a data channel with an adjacent sub-TB comprises: sending TB information to the management TB through a control channel between the sub-TB and the management TB; receiving a topology file updated based on the TB information sent by the management TB; determining an adjacent sub-TB based on the topology file; establishing a data communication connection with the determined adjacent sub-TB; starting a local data thread according to the data communication connection;
or
wherein establishing a service channel with the management TB comprises: establishing a service communication connection with a service server established by the management TB; starting a local service thread based on the service communication connection;
or
the method further comprises: closing the service channel with the management TB, the data channel with the adjacent sub-TB and the control channel with the management TB in response to a verification end message sent by the management TB through a control channel between the management TB and each of sub-TBs.

14. A chip verification device, which is applied to a management TestBench TB in a chip verification system, wherein the chip verification system further comprises a simulation TB, the simulation TB comprises a plurality of sub-TBs, and each of the sub-TBs is deployed with a different sub-DUT file of sub-DUT files of a Design Under Test DUT file of a chip;
the device comprises:
a control module to control a head TB to start verification through a control channel, so that the head TB generates a simulation input signal, wherein the head TB is a sub-TB deployed with a first sub-DUT file for a service simulation task;
a service information receiving module to receive the simulation input signal sent by the head TB through a service channel; receive a simulation result for the service simulation task fed back by a tail TB through a service channel, wherein the tail TB is a sub-TB deployed with a last sub-DUT file for the service simulation task;
a chip verification module to obtain a benchmark result of the service simulation task based on the simulation input signal, and verify the chip according to the benchmark result and the simulation result.

15. A chip verification device, which is applied to a sub-TB of sub-TBs comprised in a simulation TestBench TB in a chip verification system, wherein the chip verification system further comprises a management TB, and each of the sub-TBs is deployed with a different sub-DUT file of sub-DUT files of a Design Under Test DUT file of a chip;
the device comprises:
a control response module to generate, if the simulation TB is a head TB, a simulation input signal in response to a startup verification control of the management TB, and run a locally deployed local sub-DUT file based on the simulation input signal to obtain an intermediate result, wherein the head TB is a sub-TB deployed with a first sub-DUT file for a service simulation task;
a data transceiver module to send, if the simulation TB is the head TB, the obtained intermediate result to a downstream TB through a data channel; if the sub-TB is an intermediate TB, receive an intermediate result sent by an upstream TB, run a locally deployed local sub-DUT file with the received intermediate result as an input to obtain an intermediate result, and send the obtained intermediate result to a downstream TB through a data channel between the intermediate TB and the downstream TB; if the sub-TB is a tail TB, receive an intermediate result sent by an upstream TB, run a locally deployed local sub-DUT file with the received intermediate result as an input to obtain a simulation result, wherein the tail TB is a sub-TB deployed with a last sub-DUT file for the service simulation task, the intermediate TB is a sub-TB other than the head TB and the tail TB, a sub-DUT file deployed for the downstream TB is a downstream sub-DUT file of the local sub-DUT file, and a sub-DUT file deployed for the upstream TB is an upstream sub-DUT file of the local sub-DUT file;
a service information sending module to send, if the simulation TB is the head TB, the simulation input signal to the management TB through a service channel; if the sub-TB is the tail TB, send the simulation result to the management TB through a service channel, so that the management TB verifies the chip based on the simulation input signal and the simulation result.

16. A verification platform, comprising a processor and a machine-readable storage medium, wherein the machine-readable storage medium stores machine-executable instructions which when executed by the processor, cause the processor to implement the method according to any one of claims 8-10 and 11-13.

17. A computer-readable storage medium, storing machine executable instructions which, when called and executed by a processor, cause the processor to implement the method according to any one of claims 8-10 and 11-13.
